(19) Europäisches Patentamt

European Patent Office

Office européen des brevets

(11) **EP 4 593 118 A1**

(12) **EUROPEAN PATENT APPLICATION**
published in accordance with Art. 153(4) EPC

(43) Date of publication:
**30.07.2025 Bulletin 2025/31**

(21) Application number: **23868273.6**

(22) Date of filing: **21.09.2023**

(51) International Patent Classification (IPC):
**H01M 4/525** (2010.01)  **C01G 53/00** (2025.01)

(52) Cooperative Patent Classification (CPC):
**C01G 53/00; H01M 4/525;** Y02E 60/10

(86) International application number:
**PCT/JP2023/034373**

(87) International publication number:
**WO 2024/063152 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022 JP 2022151834**

(71) Applicant: **Proterial, Ltd.
Tokyo 135-0061 (JP)**

(72) Inventors:
• **NAKABAYASHI Takashi
Tokyo 135-0061 (JP)**
• **TOKORO Hisato
Tokyo 135-0061 (JP)**
• **TAKANO Shuichi
Tokyo 135-0061 (JP)**

(74) Representative: **Becker, Eberhard
Becker Kurig & Partner
Patentanwälte mbB
Bavariastraße 7
80336 München (DE)**

(54) **METHOD FOR MANUFACTURING PRECURSOR OF POSITIVE-ELECTRODE ACTIVE MATERIAL FOR LITHIUM-ION SECONDARY BATTERY, PRECURSOR OBTAINED THEREBY, AND METHOD FOR MANUFACTURING POSITIVE-ELECTRODE ACTIVE MATERIAL FOR LITHIUM-ION SECONDARY BATTERY**

(57)    Provided are a method for manufacturing a positive-electrode active material for a lithium-ion secondary battery that has excellent electrochemical characteristics and makes it possible to reduce the amount of greenhouse gases (GHGs) discharged, a precursor used in the aforementioned method, and a method for manufacturing the precursor. The present invention is a method for manufacturing a precursor of a positive-electrode active material for a lithium-ion secondary battery, the method having an oxidation step for mixing together a metal nickel powder and a lithium-containing compound, and then oxidizing the metal nickel powder after the mixing, the oxidation step resulting in formation of a precursor including nickel oxide having an oxidation rate of 10-70%, the oxidation rate indicating the proportion of the amount of oxidized nickel to the entire amount of Ni contained.

FIG. 1

EP 4 593 118 A1

## Description

Technical Field

The present invention relates to a method for manufacturing a precursor of a positive-electrode active materials for a lithium-ion secondary battery, a precursor obtained thereby, and a method for manufacturing a positive-electrode active material for a lithium-ion secondary battery.

Related Art

Lithium-ion secondary batteries are widely used in various fields such as electronics, automobiles, and infrastructure. Particularly, in terms of automobiles, lithium-ion secondary batteries have been used as the power source for electric vehicles (EVs) and have become important core components. From the viewpoint of extending the driving range, the energy density of lithium-ion secondary batteries is improving year by year, and a high-capacity ternary layered material has been used as the positive-electrode active material used in the batteries. The ternary layered material is composite oxide of a metal element, such as Ni, Co, Mn, or Al, and Li (hereinafter, referred to as lithium metal composite oxide). Furthermore, from the viewpoint of maintaining a sustainable global environment, there is a demand for reducing greenhouse gas (GHGs) emissions associated with the manufacture of positive-electrode active materials.

Patent Document 1 describes a method for manufacturing a positive-electrode active material using metal hydroxide as a precursor. A process for manufacturing a positive-electrode active material by reacting metal hydroxide with a Li source is widely adopted.

Further, Patent Document 2 describes a manufacturing method in which a nickel source is melted, nickel particles obtained by an atomization method are dissolved in a sulfuric acid aqueous solution to obtain nickel sulfate, then hydroxide containing Ni is obtained by a crystallization method, and a positive-electrode active material for a secondary battery is obtained by a coprecipitation method using this hydroxide.

In addition, Patent Document 3 describes a method for manufacturing a positive-electrode active material from a nickel raw material that contains metal nickel.

Citation List

Patent Documents

[Patent Document 1] Japanese Patent Application Laid-Open No. 2015-002120
[Patent Document 2] International Publication No. 2020/066262
[Patent Document 3] International Publication No. 2010/082240

SUMMARY OF INVENTION

Technical Problem

As described in Patent Document 1 and Patent Document 2, the positive-electrode active material is manufactured by reacting synthesized transition metal hydroxide particles with a Li source through coprecipitation reaction. In the coprecipitation reaction, an aqueous solution of nickel sulfate or the like is used as a raw material, and these are produced by dissolving nickel bullion that has been highly refined to avoid impurities in acid. Nickel sulfate is produced by refining nickel from nickel ore extracted from mines and undergoing processes such as acid dissolution, so there is a problem that nickel sulfate emits more GHGs during production than metal nickel. In addition, since nickel sulfate is a hexahydrate, the mass% (content) of Ni is about 20% to 25% and the bulk density is low. To compensate for this, the volume to be handled in the manufacturing process of the positive-electrode active material becomes large. At the same time, the transportation costs also increase. For this reason, more energy is required for transportation and production, which makes the manufacturing process complicated and lengthy. As a result, there is a problem that the amount of GHG emissions increases.

Furthermore, in Patent Document 3, metal nickel is calcined directly, and therefore there is a risk that the metal nickel may be sintered during the calcination process and may not be able to maintain the particle state. In addition, the crystal structure of the positive-electrode active material is unstable, which also results in unstable electrochemical characteristics of the lithium-ion secondary battery.

The present invention aims to provide a method for manufacturing a precursor of a positive-electrode active material for a lithium-ion secondary battery that can contribute to reduction of the amount of GHG emissions, a precursor obtained thereby, and a method for manufacturing a positive-electrode active material for a lithium-ion secondary battery that has a stable crystal structure and good electrochemical characteristics.

Solution to Problem

The present invention uses metal nickel powder as a nickel source, which is a raw material that produces less GHG emissions during production compared to conventional nickel sulfate. By using metal nickel powder as a nickel source, the volume to be handled during transportation and the manufacturing process of the positive-electrode active material can be reduced, which reduces the energy used in transportation and production and eliminates the complexity of the manufacturing process. As a result, attention is focused on reducing the amount of GHG emissions associated with the manufacture of the positive-electrode active material.

Therefore, a method for manufacturing a precursor of a positive-electrode active material for a lithium-ion secondary battery according to the present invention includes: a mixing step of mixing metal nickel powder and a lithium-containing compound; and an oxidation step of oxidizing the metal nickel powder after mixing, in which the oxidation step forms a precursor including nickel oxide having an oxidation rate of 10% or more and 70% or less, and the oxidation rate indicates a ratio of an amount of oxidized nickel to a total amount of Ni contained.

In the precursor, the metal nickel powder preferably has an average particle size of 20 $\mu$m or less.

In the precursor, in response to an average particle size of the metal nickel powder exceeding 20 $\mu$m, a lithiation rate is preferably increased to 10% or more through the oxidation step.

The oxidation step preferably oxidizes in an oxidizing atmosphere less than a melting point of the lithium-containing compound.

In addition, in the method for manufacturing the precursor according to the present invention, in response to an amount of a lithium compound required for manufacturing the positive-electrode active material for the lithium-ion secondary battery being set to 100% by mass, a mixing amount of the lithium-containing compound in the mixing step is preferably 10% by mass or more and 100% by mass or less.

Here, the lithium-containing compound is preferably lithium carbonate.

A method for manufacturing a positive-electrode active material for a lithium-ion secondary battery according to the present invention includes: a calcination step of calcining the precursor manufactured by the method for manufacturing the precursor of the positive-electrode active material for the lithium-ion secondary battery at 700°C or more and 900°C or less to obtain a positive-electrode active material.

In the method for manufacturing the positive-electrode active material, the calcination step is performed after mixed powder is obtained by mixing the precursor and at least one of a lithium-containing compound and a compound containing a metal element M other than lithium and nickel.

In this case, the method includes: a pulverization step of pulverizing the mixed powder; and then a granulation step of granulating the pulverized mixed powder to form granulated powder, in which the calcination step can be performed on the granulated powder.

Further, the method for manufacturing the positive-electrode active material includes: a pulverization step of pulverizing the mixed powder; and then a granulation step of granulating the pulverized mixed powder to form granulated powder, in which in response to a mixing amount of a lithium-containing compound in the precursor being less than 100% by mass, a mixing amount of the remaining lithium-containing compound is added after the granulation step to form mixed granulated powder, and the calcination step is performed on the mixed granulated powder.

The pulverization step can include a coarse pulverization step and a fine pulverization step.

Preferably, a lithium-containing compound mixed before the oxidation step and a lithium-containing compound added after the granulation step are different compounds, and a melting point of the lithium-containing compound mixed before the oxidation step is higher than a melting point of the lithium-containing compound added after the granulation step.

Furthermore, the positive-electrode active material for the lithium-ion secondary battery is preferably represented by the following composition formula (1):

$$Li_{1+a}Ni_bM_{(1-b)}O_{2+\alpha} \qquad ... (1)$$

(where in the formula (1), M is a metal element other than Li and Ni, and a, b, and $\alpha$ are numbers satisfying $-0.1 \leqq a \leqq 0.2$, $0.6 \leqq b \leqq 1.0$, and $-0.2 \leqq \alpha \leqq 0.2$).

A precursor of a positive-electrode active material for a lithium-ion secondary battery according to the present invention includes metal nickel powder and a lithium-containing compound, in which the precursor contains nickel oxide having an oxidation rate of 10% or more and 70% or less, the oxidation rate indicates a ratio of an amount of oxidized nickel to a total amount of nickel contained, and the nickel oxide has a crystallite size of 100 nm or less.

A precursor of a positive-electrode active material for a lithium-ion secondary battery according to the present invention includes metal nickel powder and a lithium-containing compound, in which the precursor contains nickel oxide having an oxidation rate of 10% or more and 70% or less, the oxidation rate indicates a ratio of an amount of oxidized nickel to a total amount of nickel contained, and the precursor further contains lithium metal oxide.

In the following, the "oxidation rate indicates a ratio of an amount of oxidized nickel to a total amount of nickel contained" will be simply referred to as "oxidation rate."

Effects of Invention

According to the present invention, a precursor of a positive-electrode active material for a lithium-ion secondary battery is manufactured using metal nickel powder, which makes it possible to reduce the energy used in transportation and production and eliminate the complexity of the manufacturing process. As a result, it is possible to provide a precursor of a positive-electrode active material for a lithium-ion secondary battery, which can contribute to reduction of the amount of GHG emissions, and a method for manufacturing the same. Furthermore, it is possible to provide a positive-electrode active material that has a stable crystal structure and good electrochemical characteristics by a method for manufacturing a positive-electrode active material for a lithium-ion secondary battery.

BRIEF DESCRIPTION OF DRAWINGS

FIG. 1 is a flowchart showing an example of a method for manufacturing a precursor of a positive-electrode active material for a lithium-ion secondary battery according to the present invention.
FIG. 2 is a flowchart showing an example of a method for manufacturing a positive-electrode active material for a lithium-ion secondary battery according to the present invention.
FIG. 3 is a flowchart showing an example of a method for manufacturing a positive-electrode active material for a lithium-ion secondary battery according to the present invention.
FIG. 4 is a flowchart showing an example of a method for manufacturing a positive-electrode active material for a lithium-ion secondary battery according to the present invention.
FIG. 5 is a flowchart showing an example of a method for manufacturing a positive-electrode active material for a lithium-ion secondary battery according to the present invention.
FIG. 6 is a flowchart showing an example of a method for manufacturing a positive-electrode active material for a lithium-ion secondary battery according to the present invention.
FIG. 7 shows X-ray diffraction (XRD) patterns of the precursors of the positive-electrode active materials for lithium-ion secondary batteries of Examples 1 and 2 and Comparative Examples 1 and 2.
FIG. 8 shows XRD patterns of the positive-electrode active materials for lithium-ion secondary batteries of Examples 1 and 2 and Comparative Examples 1 and 2.
FIG. 9 is a graph showing the relationship between the R value and the oxidation rate.
FIG. 10 shows electron probe microanalyzer (EPMA) mapping images of a particle cross section of the positive-electrode active material for a lithium-ion secondary battery of Example 1.
FIG. 11 is a graph showing the relationship between the Ni ratio in the central portion of the positive-electrode active material for a lithium-ion secondary battery and D50 of metal nickel powder.
FIG. 12 is a scanning electron microscope (SEM) image of a particle cross section of the positive-electrode active material for a lithium-ion secondary battery of Example 3.
FIG. 13 is a SEM image of a particle cross section of the positive-electrode active material for a lithium-ion secondary battery of Example 5.
FIG. 14 is a SEM image of a particle cross section of the positive-electrode active material for a lithium-ion secondary battery of Example 1.

DESCRIPTION OF EMBODIMENTS

[Method for manufacturing metal nickel powder]

Before describing a method for manufacturing a positive-electrode active material, a method for manufacturing metal nickel powder will be illustrated.

In this embodiment, metal nickel powder manufactured by an atomization method or a carbonyl method, for example, can be used. The atomization method and the carbonyl method are preferable for these methods make it possible to obtain metal nickel powder with a small number of impurity elements. Further, the atomization method is preferable for obtaining spherical powder. For the purpose of avoiding short circuits in the battery, high-purity raw materials are used for the battery components. In particular, iron (Fe) is an impurity element that easily causes short circuits, so the Fe content of the metal nickel powder is preferably 100 ppm or less. The Fe content is more preferably 30 ppm or less, and even more preferably 10 ppm or less. A high-purity briquette or cathode of Class I quality is suitable as a high-purity nickel source. In this embodiment, high-purity metal nickel powder with few impurities is obtained without dissolving the briquette or cathode in acid.

Besides, the carbonyl method is another method for obtaining metal nickel powder. The carbonyl method obtains metal nickel powder by reacting a nickel briquette or the like with carbon monoxide gas to obtain gaseous nickel carbonyl, which is then thermally decomposed at a low temperature under reduced pressure. High-purity metal nickel powder can also be obtained using the carbonyl method.

The average particle size of the metal nickel powder is preferably in the range of 1 $\mu$m to 100 $\mu$m. This particle size can be measured by a laser diffraction particle size distribution measuring device. In this specification, D50 is regarded as the average particle size. In the case where the pulverization step which will be described later is omitted, the average particle size D50 of the metal nickel powder is preferably 20 $\mu$m or less, and more preferably 8 $\mu$m or less. When the average particle size D50 of the metal nickel powder is 20 $\mu$m or less, lithium and metal elements other than nickel diffuse to the central portion of the metal nickel powder, and the composition within the positive-electrode active material becomes almost uniform. Furthermore, if D50 of the metal nickel powder is 8 $\mu$m or less, the composition within the positive-electrode active material becomes more uniform, which is preferable.

On the other hand, in the case where the pulverization step is performed, the average particle size D50 of the metal nickel powder is more than 20 $\mu$m with no upper limit, but is, for example, more than 20 $\mu$m and not more than 100 $\mu$m, and the powder may be pulverized after the oxidation step which will be described later. The particle size of the metal nickel powder can be controlled by the injection pressure, etc. of injected water or gas in the atomization method, and can be controlled by the thermal decomposition conditions in the carbonyl method. Powder larger than 100 $\mu$m can be removed by sieve classification and returned to dissolution or the like (recycled).

[Method for manufacturing precursor of positive-electrode active material]

A method for manufacturing a precursor of a positive-electrode active material using metal nickel powder will be described below.

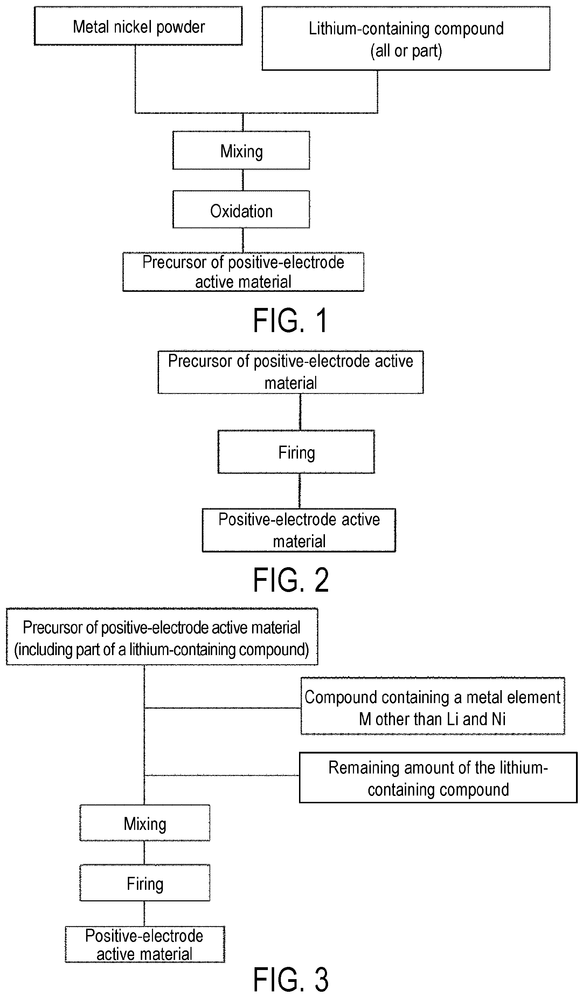

As shown in the flowchart of FIG. 1, metal nickel powder and all or part of a lithium-containing compound are mixed, and an oxidation step is performed on the mixed powder. Nevertheless, all or part of a compound containing a metal element M other than lithium and nickel may be mixed before the oxidation step. The positive-electrode active material of this embodiment is obtained by calcination in an atmosphere containing oxygen, and by introducing a precursor of the metal nickel powder that has undergone the oxidation step, a positive-electrode active material with good crystallinity can be manufactured. In addition, the lithium-containing compound (for example, lithium carbonate) acts as a buffer material, and can prevent the metal nickel powder from sintering in the oxidation step and can maintain the powder state even after the oxidation step, making it possible to obtain a powdered precursor. In the case where the metal nickel powder cakes after the oxidation step, the metal nickel powder may be crushed. Furthermore, by performing the oxidation step together with the lithium-containing compound, lithium metal oxide (lithium nickel oxide) is also produced, and a precursor containing lithium metal oxide can be obtained. A positive-electrode active material with good crystallinity can be obtained with use of this precursor.

As described above, in the present invention, metal nickel powder is used as the nickel raw material, and therefore an acid dissolution step and a coprecipitation step are not required. It has been estimated that the amount of $CO_2$ emissions generated during the production of metal nickel is approximately 30% less than the amount for nickel sulfate, and the use of metal nickel powder can reduce the amount of $CO_2$ emissions generated by the manufacture of the precursor and the positive-electrode active material. Further, since metal nickel powder is used as the nickel raw material, the volume to be handled during transportation and in the manufacturing process of the positive-electrode active material can be reduced compared to the case where compounds such as nickel sulfate and nickel hydroxide are used. Specifically, when the Ni content per unit volume of each compound is expressed in mass%, nickel sulfate ($Ni(SO)_4 \cdot 6H_2O$) has a Ni content of 5% and nickel hydroxide ($Ni(OH)_2$) has a Ni content of 29%, while metal nickel has a Ni content of 100%, which results in a higher Ni content per unit volume. As a result, in this embodiment, the volume to be handled during transportation and in the manufacturing process of the positive-electrode active material is about 1/20 compared to nickel sulfate and about 1/3 compared to nickel hydroxide, which makes it possible to suppress fuel consumption during transportation, and save space during the manufacture and reduce the driving force to improve production efficiency and save energy. These lead to the reduction of the amount of GHG emissions, making it possible to manufacture a positive-electrode active material while suppressing GHGs.

The lithium-containing compound to be mixed with the metal nickel powder before the oxidation step may be a single lithium compound or a mixture of multiple types of lithium compounds. Even in the case where a mixture of multiple types of lithium compounds is used, the mass ratio of lithium in the lithium-containing compound may be within the range described below. The amount of the lithium-containing compound mixed with the metal nickel powder is preferably 10% by mass or more and 100% by mass or less, when the amount of the lithium-containing compound necessary for manufacturing the desired positive-electrode active material is taken as 100% by mass. This is because the presence of the lithium-containing compound can suppress sintering. By mixing 10% or more with metal nickel powder, it becomes easier to control the prevention of sintering among the metal nickel powder during the oxidation step. The amount of the lithium-containing compound to be mixed is preferably 50% by mass or less, and more preferably 25% by mass or less. This makes it possible to reduce the amount of oxidation treatment in the oxidation step, reduce the energy consumed in the oxidation treatment, and reduce the costs and the amount of GHG emissions. Furthermore, in the case where the pulverization step is performed during the manufacture of the positive-electrode active material as described later, the amount of the lithium-containing compound mixed before the oxidation step is preferably 10% by mass or more and 50% by mass or less, and more preferably 25% by mass or less. If the amount of the lithium compound mixed is reduced, the voids among the secondary particles of the positive-electrode active material are reduced. As a result, the particle strength of the positive-electrode active material increases, and the charge/discharge cycle characteristics are improved. In addition, by mixing 10% by mass or more of the lithium-containing compound with metal nickel powder, lithium metal oxide (lithium nickel oxide) is formed in addition to nickel oxide after the oxidation step. When metal nickel becomes lithium metal oxide, the volume expands by about three times, and the stress generated by this volume change causes cracks in the precursor. As a result, in the case where the pulverization step is not performed, the cracks become diffusion paths for the elements, making it easy for each element to diffuse uniformly. On the other hand, in the case where the pulverization step is performed, the cracks facilitate the pulverization.

The lithium-containing compound may be lithium hydroxide, lithium carbonate, or the like. In addition, the lithium-containing compound preferably has a melting point higher than the thermal oxidation temperature of the oxidation step. If the melting point of the lithium-containing compound is higher than the thermal oxidation temperature, sintering among the metal nickel powder during the oxidation step can be prevented. Therefore, the lithium-containing compound used in this manufacturing method is preferably lithium carbonate. The melting point of lithium carbonate is as high as 724°C, which makes it possible to increase the temperature of thermal oxidation to as high as 720°C. This is because lithium carbonate remains solid even at an oxidation treatment temperature of 720°C, and functions as a buffer material that can prevent contact and sintering among the metal nickel powder and also shorten the time for the oxidation step. On the other hand, lithium hydroxide may be used as the lithium-containing compound to be added after the granulation step which will be described later. This is because lithium hydroxide has a lower melting point of 462°C than lithium carbonate and melts at a low temperature, and is therefore considered to be more likely to react with the precursor. In this manner, the lithium-containing compound to be mixed before the oxidation step and the lithium-containing compound to be added after the granulation step may be different compounds, and the lithium-containing compound to be mixed before the oxidation step may be selected to have a higher melting point. The average particle size of the lithium-containing compound is preferably from 100 nm to 100 $\mu$m, and more preferably from 1 $\mu$m to 50 $\mu$m.

The metal nickel powder and the lithium-containing compound are mixed using a V-type mixer, a stirring mixer, an attritor, a media mill, or the like. In order to mix these raw materials uniformly, it is preferable to be able to crush agglomerations of each raw material powder. The mixing method may be either a dry method in which only the raw material powder is mixed, or a wet method in which a liquid is used as a dispersion medium.

Thermal oxidation in an oxidizing atmosphere is preferred for the oxidation step because the time required for the oxidation treatment is short. Further, in the case of thermal oxidation, the temperature is about 450°C to 720°C, and preferably 450°C to 700°C. This is because a precursor having a desired oxidation rate can be easily obtained by setting the temperature to 450°C to 700°C. In addition, the heat treatment time for the oxidation treatment is 0.5 hours to 20 hours, preferably 3 hours to 15 hours, and more preferably 5 hours to 10 hours. This is because the oxidation reaction is completed by performing the oxidation treatment for 5 hours to 10 hours, and a precursor having a desired oxidation rate can be stably obtained. In this case, the oxidation rate in the oxidation step is 10% or more and 70% or less. If the oxidation rate is 10% or more, sintering among the metal nickel powder can be prevented in the subsequent calcination step for obtaining the positive-electrode active material. Furthermore, if the oxidation rate is 10% or more, the valence of nickel increases, so it can be expected to promote the reaction to form lithium metal composite oxide during calcination of the positive-electrode active material. On the other hand, if the oxidation rate is 70% or less, a positive-electrode active material with good crystallinity can be obtained. The reason is considered to be that the formation of a layered structure is promoted in the calcination step when the positive-electrode active material is manufactured using a precursor having an oxidation rate within the above range, rather than using metal nickel powder that has been excessively oxidized. The oxidation rate is preferably 40% to 70%, and more preferably 49% to 68%. This is because, by setting the oxidation rate to 49% or more, the valence of nickel becomes higher, and the reaction to form lithium metal composite oxide during calcination is further promoted. On the other hand, by setting the oxidation rate to 68% or less, the formation of a layered structure is promoted in the calcination step, compared to the case of using metal nickel powder that has been excessively oxidized. In addition, lithium metal oxide (which means lithium nickel oxide, and will be omitted hereinafter) may be generated through the oxidation step. If lithium metal oxide is generated, the reaction between the lithium source and a metal source such as nickel is promoted in the subsequent calcination step for obtaining the positive-electrode active material, and the formation of crystals of a layered structure is promoted, resulting in a positive-electrode active material with good crystallinity.

Next, in the case where metal nickel powder having an average particle size D50 exceeding 20 $\mu$m is used, the mixing of the lithium-containing compound and the oxidation step for oxidizing the metal nickel powder after mixing can be performed by the same method and conditions as described above. However, the precursor after the oxidation step is in a state of a crude precursor having nickel oxide with an oxidation rate of 10% or more and 70% or less, and this crude precursor having a size of more than 20 $\mu$m is preferably pulverized to obtain a precursor having a size of 20 $\mu$m or less. Therefore, in the case where metal nickel powder having an average particle size D50 exceeding 20 $\mu$m is used, the pulverization step is performed when manufacturing the positive-electrode active material. By doing this, metal elements other than lithium and nickel are diffused to the central portion of the metal nickel powder, and the composition within the secondary particles of the positive-electrode active material becomes almost uniform, so that the same effect can be achieved as in the method using metal nickel powder of 20 $\mu$m or less described above. Furthermore, it is also possible to pulverize only the crude precursor, and mix this with a lithium-containing compound and a compound containing a metal element M other than lithium and nickel. Even in the case where metal nickel powder having an average particle size D50 of 20 $\mu$m or less is used, the pulverization step may be performed.

The oxidation rate can be obtained by the following method.

(Oxidation rate)

The oxidation rate of the precursor indicates the ratio of the amount of oxidized nickel to the total amount of nickel contained, and was calculated from formula (4) based on the mass $M_{Ni}$ of the metal nickel powder input to the oxidation treatment, the mass $M_i$ of the buffer material component (the lithium-containing compound or the compound containing the metal element M), and the mass $M_p$ of the precursor (oxide powder) after the oxidation treatment. $M_p - (M_{Ni} + M_i)$ is the mass increase amount of the metal nickel powder due to the oxidation treatment, and $(M_p - (M_{Ni} + M_i))/M_{Ni}$ is the mass increase rate. The oxidation rate was calculated by dividing this mass increase rate by the mass increase rate of 29.8% in the case where the metal nickel powder was completely oxidized.

$$\text{Oxidation rate} = (M_p - (M_{Ni} + M_i))/M_{Ni}/0.298 \times 100 \ \dots \ (4)$$

[Precursor of positive-electrode active material]

In the case where the precursor of the positive-electrode active material is not subjected to the pulverization step, the crystallite size of the nickel oxide contained in the precursor is preferably 100 nm or less. The lower limit can be, for example, 5 nm or more, and is preferably 10 nm or more. If the crystallite size of the nickel oxide contained in the precursor is 100 nm or less, a positive-electrode active material with good crystallinity can be manufactured. The reason is considered to be that, as the crystallite size of the nickel oxide in the precursor is as fine as 100 nm or less, the formation of a layered structure in the calcination step for obtaining the positive-electrode active material is promoted. On the other hand, if the crystallite size is 5 nm or more, a positive-electrode active material having an appropriate primary particle size can be obtained.

Furthermore, the precursor of the positive-electrode active material may contain lithium metal oxide in the precursor. This is because, by containing the lithium metal oxide, the reaction between the lithium source and the metal source such as nickel in the calcination step for obtaining the positive-electrode active material is promoted, thereby promoting the formation of a layered structure. The term "containing lithium metal oxide" refers to a case where the intensity ratio $I_{LNO}/I_{Ni}$ is 0.02 or more, which is the ratio of a peak intensity $I_{LNO}$ at about $2\theta = 43.7°$ to $44.0°$ attributable to lithium metal oxide in an X-ray diffraction (XRD) pattern measured by the method described below, to a peak intensity $I_{Ni}$ at about $2\theta = 44.4°$ to $44.7°$ attributable to metal nickel.

[Method for manufacturing positive-electrode active material]

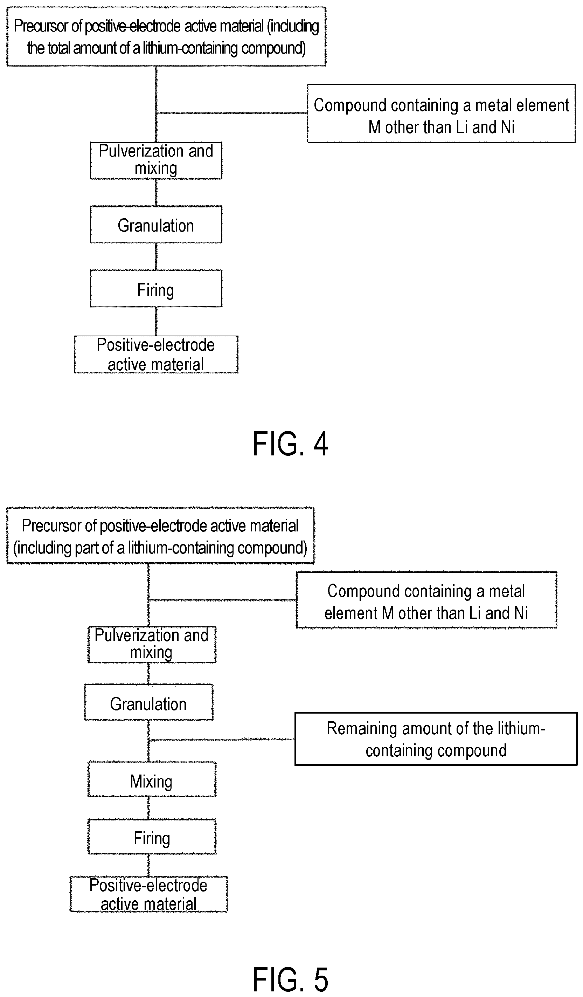

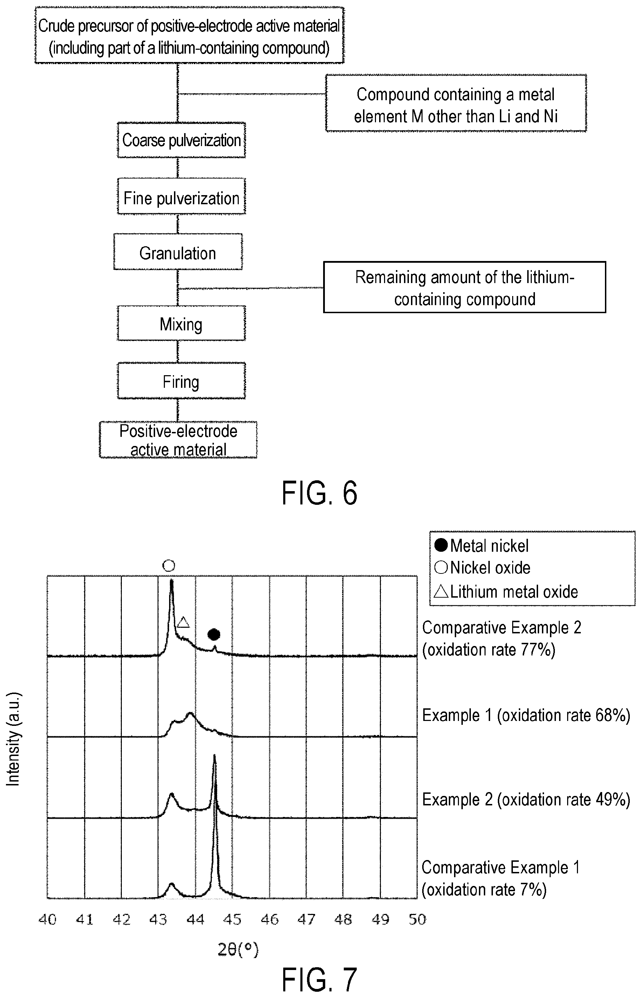

The method for manufacturing the positive-electrode active material according to this embodiment is characterized by using the above-mentioned precursor of the positive-electrode active material. This is shown in the flowcharts of FIG. 2 to FIG. 6. As shown in FIG. 2, the positive-electrode active material may be manufactured by calcining the precursor, or as shown in FIG. 3, the positive-electrode active material may be manufactured by mixing the precursor with the lithium-containing compound and the compound containing the metal element M other than lithium and nickel, and then calcining the mixture so as to obtain the positive-electrode active material having the desired composition. Furthermore, as shown in FIG. 4 or FIG. 5, the pulverization step or the granulation step may be added. In addition, FIG. 5 has a step of adding the remaining amount of the lithium-containing compound. FIG. 6 includes a coarse pulverization step and a fine pulverization step. Each embodiment is described below in more detail in conjunction with the examples.

In the case where the above-mentioned precursor includes all of the metal nickel powder and the compound containing the metal element M other than lithium and nickel required for manufacturing the positive-electrode active material, the positive-electrode active material can be manufactured by calcining the precursor, as shown in FIG. 2. Details of the calcination will be described later.

The precursor, the lithium-containing compound, and the compound containing the metal element M other than lithium and nickel are mixed using a V-type mixer, a stirring mixer, an attritor, a media mill, or the like. In order to mix these raw materials uniformly, it is preferable to be able to crush agglomerations of each raw material powder. The mixing method may be either a dry method in which only the raw material powder is mixed, or a wet method in which a liquid is used as a dispersion medium.

The lithium-containing compound to be mixed with the precursor may be lithium hydroxide, lithium carbonate, or the like. Lithium carbonate is preferred for lithium carbonate has low hygroscopicity and is easy to handle. In the case where the pulverization step is omitted during the production of the positive-electrode active material, it is preferable to use lithium hydroxide. This is because the diffusion of the metal element M other than nickel into the interior of the metal nickel powder is promoted, making it possible to manufacture a positive-electrode active material with a uniform composition.

Next, it is preferable to introduce a step of pulverizing and mixing (referred to as the pulverization step) for the purpose of promoting the calcination reaction. This is because a positive-electrode active material having a high initial capacity and good charge/discharge cycle characteristics can be obtained. The pulverization and mixing can be performed using an attritor, a media mill, or the like. It is preferable to use a media mill, and more preferable to use a beads mill, so as to be able to pulverize the mixed powder to submicron size. The mixed powder after pulverization and mixing (pulverized mixed powder) preferably has a D50 of primary particles of 0.30 $\mu$m or less. The calcination reaction is promoted, and voids in the positive-electrode active material are suppressed. As a result, the particle strength of the positive-electrode active material increases, and the charge/discharge cycle characteristics are improved.

Furthermore, in the case where the metal nickel powder has a coarse average particle size D50 exceeding 20 $\mu$m, it is preferable to perform the pulverization step in two stages by changing the pulverization conditions. Specifically, it is preferable to perform the pulverization in two stages, that is, in the first stage, coarse pulverization and mixing to a size of less than 10 $\mu$m (coarse pulverization step), and then in the second stage, fine pulverization and mixing to a submicron size (fine pulverization step). In addition, it is preferable to use a media mill in both the coarse pulverization step and the fine pulverization step, and it is preferable that the media size in the fine pulverization step is smaller than the media size in the coarse pulverization step. By performing pulverization in two stages, it is possible to suppress the inclusion of media components from the media mill, and to obtain a positive-electrode active material of the desired composition with few impurities.

In the above-described manufacturing process of the precursor, in the case where the mixing amount of the lithium-containing compound is less than 100% to the amount of the lithium compound required for manufacturing the desired positive-electrode active material, it is preferable to add the remainder of the lithium-containing compound after the granulation step (post-addition) in the manufacturing process of the positive-electrode active material. If a large amount of the lithium-containing compound is present in the granulated powder, the resulting structure has many voids after calcining, the particle strength of the positive-electrode active material decreases, and the charge/discharge cycle characteristics deteriorate. However, by adding the lithium compound after granulation, the amount of the lithium-containing compound in the granulated powder can be reduced, resulting in a structure with few voids after calcining. As a result, the particle strength of the positive-electrode active material increases, resulting in good charge/discharge cycle characteristics.

Next, the calcination step of calcining the mixed powder or pulverized mixed powder to obtain a layered structure positive-electrode active material for a lithium-ion secondary battery will be described.

An electric furnace or a gas furnace is used for calcining the raw material mixed powder or granulated powder. The atmosphere of the calcination preferably contains oxygen at a volume ratio of 20% or more, and in the case where the Ni content is 80 atom% or more of all metal elements excluding Li, the oxygen concentration is preferably 90% or more.

The calcination step may be performed as long as the powder is calcined at a temperature of 700°C or more and 900°C or less to obtain a layered structure positive-electrode active material. In this case, the calcination step may be a step including a pre-calcining stage in which the temperature is maintained at 450°C or more and 730°C or less, and a main calcining stage in which the temperature is maintained at a temperature higher than the calcining temperature in the pre-calcining stage and at 700°C or more and 900°C or less. The preferred calcining temperature and holding time are adjusted according to the composition of the raw materials when mixed together, and calcining is performed so that the physical properties (specific surface area, etc.) of the desired positive-electrode active material after calcining fall within preferred ranges.

The synthesized lithium metal composite oxide may be subjected to a washing step of washing the synthesized lithium metal composite oxide with deionized water or the like, and a drying step of drying the washed lithium metal composite oxide after the calcination step, for the purpose of removing impurities or the like. The synthesized lithium metal composite oxide may also be subjected to a crushing step of crushing the synthesized lithium metal composite oxide, and a classification step of classifying the lithium metal composite oxide in a predetermined particle size.

Next, the composition of the positive-electrode active material of this embodiment will be described. As described above, the composition of the positive-electrode active material of this embodiment is not particularly limited, but a preferred composition is described below.

First, the positive-electrode active material according to this embodiment is represented by the following formula (1).

$$Li_{1+a}Ni_bM_{(1-b)}O_{2+\alpha} \qquad ... (1)$$

(where in the formula (1), M is a metal element other than Li and Ni, and a, b, and $\alpha$ are numbers satisfying $-0.1 \leqq a \leqq 0.2$, $0.6 \leqq b \leqq 1.0$, and $-0.2 \leqq \alpha \leqq 0.2$.)

The positive-electrode active material according to this embodiment has a composition in which the proportion of Ni in all metal elements other than Li is 60 atom% or more, and thus can achieve high energy density and a high initial capacity. The proportion of Ni in all metal elements other than Li can take an appropriate value within the range of 60 atom% or more and 100 atom% or less. Since the positive-electrode active material contains such a high proportion of nickel, it is important that the oxidation reaction for oxidizing $Ni^{2+}$ to $Ni^{3+}$ is carried out efficiently.

A more preferred specific composition of the positive-electrode active material according to this embodiment is represented by formula (2).

$$Li_{1+a}Ni_bCo_cM1_dX_eO_{2+\alpha} \qquad ... (2)$$

[where in formula (2), M1 represents at least one selected from Al and Mn, X represents one or more metal elements other than Li, Ni, Co, Al, and Mn, and a, b, c, d, e, and $\alpha$ are numbers satisfying $-0.1 \leqq a \leqq 0.2$, $0.7 \leqq b \leqq 1.0$, $0 \leqq c \leqq 0.20$, $0 \leqq d \leqq 0.20$, $0 \leqq e \leqq 0.1$, $b + c + d + e = 1$, and $-0.2 < \alpha < 0.2$, respectively.]

The positive-electrode active material represented by the formula (2) has a high Ni content, and therefore can exhibit a high initial capacity in the range up to about 4.3 V, compared to $LiCoO_2$ or the like. In addition, since the Ni content is high, the raw material cost is low compared to $LiCoO_2$ or the like, and the raw materials for the positive-electrode active material are easily available.

Here, the meanings of the numerical ranges of a, b, c, d, e, and $\alpha$ in the above formulas (1) and (2) will be described.

In the above formula, a is -0.1 or more and 0.2 or less. a represents the amount of lithium excess or deficiency from the stoichiometric ratio of the lithium metal composite oxide represented by the general formula $LiM'O_2$ (M' represents a metal element such as Ni, Co, or Mn), that is, Li:M':O = 1:1:2. If the amount of lithium is too small, the initial capacity of the positive-electrode active material decreases. On the other hand, if the amount of lithium is too large, the charge/discharge cycle characteristics deteriorate. If a is in the above-mentioned numerical range, it is possible to achieve both a high initial capacity and good charge/discharge cycle characteristics.

a may be set to -0.02 or more and 0.07 or less. If a is -0.02 or more, a sufficient amount of lithium that contributes to charging and discharging is ensured, so that the initial capacity of the positive-electrode active material can be increased. Further, if a is 0.07 or less, charge compensation due to the change in the valence of the metal element is sufficiently achieved, so that both a high initial capacity and good charge/discharge cycle characteristics can be achieved.

The coefficient b of nickel is set to 0.7 or more and 1.0 or less. If b is 0.70 or more, a sufficiently high charge/discharge capacity can be obtained, compared to the case where other metal elements are used. Therefore, if b is in the above-mentioned numerical range, a positive-electrode active material exhibiting a high charge/discharge capacity can be manufactured at a lower cost than $LiCoO_2$ or the like.

b is preferably 0.80 or more and 0.95 or less, and more preferably 0.85 or more and 0.95 or less. b is 0.80 or more, and the larger b is, the higher the initial capacity can be obtained. In addition, b is 0.95 or less, and the smaller b is, the smaller the lattice distortion or crystal structure change accompanying the insertion and desorption of lithium ions becomes, and cation mixing in which nickel is mixed into the lithium sites and deterioration of crystallinity during calcining become less likely to occur, thereby suppressing deterioration of the initial capacity and charge/discharge cycle characteristics.

The coefficient c of cobalt is set to 0 or more and 0.20 or less. The addition of cobalt brings the effects of stabilizing the crystal structure and suppressing cation mixing in which nickel is mixed into the lithium sites. Therefore, the charge/discharge cycle characteristics can be improved without significantly impairing the charge/discharge capacity. On the other hand, if the cobalt is excessive, the raw material cost increases, which increases the production cost of the positive-electrode active material. If c is in the above-mentioned numerical range, it is possible to achieve both a high charge/discharge capacity and good charge/discharge cycle characteristics with good productivity.

c may be set to 0.01 or more and 0.20 or less, 0.03 or more and 0.20 or less, or 0.04 or more and 0.20 or less. c is 0.01 or more, and the larger c is, the more sufficient the effect of element substitution with cobalt can be obtained, and the charge/discharge cycle characteristics are further improved.

The coefficient d of M1 is set to 0 or more and 0.20 or less. If the element is substituted with at least one element (M1) selected from the group consisting of manganese and aluminum, the layered structure is maintained more stably even when lithium is released by charging. On the other hand, if these elements (M1) are excessive, the ratio of other metal elements such as nickel decreases, and the initial capacity of the positive-electrode active material decreases. If d is in the above-mentioned numerical range, it is possible to keep the crystal structure of the positive-electrode active material stable, and obtain good charge/discharge cycle characteristics and thermal stability in addition to a high initial capacity.

As the element represented by M1, manganese is particularly preferred. If the element is substituted with manganese, a higher initial capacity is obtained compared to the case where the element is substituted with aluminum. During the calcination of the lithium composite compound, manganese also reacts with lithium carbonate as shown in the following formula (3). Such reaction suppresses the coarsening of crystal grains and allows the oxidation reaction of nickel to proceed at a high temperature, so it is possible to efficiently obtain a positive-electrode active material that exhibits a high charge/discharge capacity.

$$Li_2CO_3 + 2M'O + 0.5O_2 \rightarrow 2LiM'O_2 + CO_2 \qquad \text{... (3)}$$

(where in the formula (3), M' represents a metal element such as Ni, Co, or Mn.)

The coefficient d of M1 is preferably 0.02 or more, and more preferably 0.04 or more. The larger the coefficient d of M1, the more sufficient the effect of element substitution with at least one element selected from the group consisting of manganese and aluminum can be obtained. In the case where M1 is manganese, the oxidation reaction of nickel can proceed at a higher temperature, making it possible to obtain a positive-electrode active material that exhibits a high initial capacity more efficiently. Moreover, the coefficient d of M1 is preferably 0.18 or less. If the coefficient d of M1 is 0.18 or less, the initial capacity is maintained high even when element substitution occurs.

The coefficient e of X is set to 0 or more and 0.1 or less. X represents one or more metal elements other than Li, Ni, Co, Al, and Mn. If the element is substituted with at least one element selected from the group consisting of magnesium, titanium, zirconium, molybdenum, and niobium, it is possible to improve various performances such as charge/discharge cycle characteristics while maintaining the activity of the positive-electrode active material. On the other hand, if these elements (X) are excessive, the ratio of other metal elements such as nickel decreases, and the charge/discharge capacity of the positive-electrode active material decreases. If e is in the above-mentioned numerical range, it is possible to achieve both a high initial capacity and good charge/discharge cycle characteristics.

In the above formulas (1) (2), $\alpha$ is set to -0.2 or more and 0.2 or less. $\alpha$ represents the amount of oxygen excess or deficiency from the stoichiometric ratio of the lithium metal composite oxide represented by the general formula $LiM'O_2$, that is, Li:M':O = 1:1:2. If $\alpha$ is in the above-mentioned numerical range, the crystal structure has few defects, and a high initial capacity and good charge/discharge cycle characteristics can be obtained.

Examples

The measurement method for the characteristic values and the preliminary experiment of the oxidation step will be described hereinafter, and then the examples will be described.

(Average particle size, particle strength)

D50 of the primary particles of the pulverized mixed powder and the secondary particles of the calcined powder of the positive-electrode active material was measured by a laser diffraction particle size distribution measuring device. The particle strength was measured using a micro-compression tester "MCT-510" (manufactured by Shimadzu Corporation). The particle strength of five positive-electrode active materials having a secondary particle size of about 10 $\mu$m was measured, and the average value was taken as the particle strength.

(Oil absorption)

The oil absorption of the powder sample was measured in accordance with JIS K5101-13-1, and NMP (N-methylpyrrolidone) was used as the solvent. 5.0 g of the powder sample was weighed out and placed in a pile on a flat vat. NMP was sucked up with a poly dropper (2 mL capacity), and the mass was measured. Next, the powder sample was kneaded with a spatula while NMP was added dropwise, and the dropping and kneading were continued until the powder sample became clay-like overall. If there was an excess of NMP, it was visible that the droplets were not absorbed by the powder sample and remained on the surface, and the amount of NMP dropped up to this point was converted per 100 g of powder sample to represent the oil absorption.

(X-ray diffraction pattern)

X-ray diffraction (XRD) patterns in the X-ray powder diffraction measurement of the precursor and the positive-electrode active material were measured using an X-ray diffraction device "X 'Pert PRO MPD" (manufactured by PANalytical) under the conditions of a CuK$\alpha$ radiation source, a tube voltage of 45 kV, a tube current of 40 mA, a sampling interval of 0.02°/step, a divergence slit of 0.5°, a scattering slit of 0.5°, a receiving slit of 0.15 mm, and a scanning range of 15° $\leqq$ 2$\theta$ $\leqq$ 80°.

(Crystallite size)

Further, the crystallite sizes of nickel oxide, lithium metal oxide (LNO), and metal Ni contained in the precursor were calculated based on formula (5) using analysis software attached to the X-ray diffraction device from the half-width $\beta$ of each peak, namely, a peak at about 2$\theta$ = 43.3° to 43.5° attributable to nickel oxide, a peak at about 2$\theta$ = 43.7° to 44.0° attributable to lithium metal oxide (LNO), and a peak at about 2$\theta$ = 44.4° to 44.7° attributable to metal nickel, after removing K$\alpha$2 from the XRD pattern obtained by measuring the precursor.

$$\text{Crystallite size} = K\lambda/\beta\cos\theta \ \ldots \ (5)$$

K: shape factor (0.9), $\lambda$: wavelength of X-ray (0.154 nm), $\theta$: diffraction angle

(R value)

Furthermore, after removing K$\alpha$2 from the XRD pattern obtained by measuring the positive-electrode active material, the integrated intensities $I_{006}$, $I_{102}$, and $I_{101}$ of the peaks of the 006 plane at about 2$\theta$ = 36°, the 102 plane at about 2$\theta$ = 37°, and the 101 plane at about 2$\theta$ = 38° were measured, and the R value was determined from formula (6). It is known that the R value decreases as the layering of the positive-electrode active material progresses, and this was used as an index of good crystallinity. In this respect, a preferable R value is 0.500 or less.

$$\text{R value} = (I_{006} + I_{102})/I_{101} \ \ldots \ (6)$$

(Oxidation (lithiation) distance)

The cross section of the precursor was subjected to line analysis of oxygen element by SEM-EDS, and the distance (depth) from the surface where oxidation and lithiation were occurring simultaneously was measured. The distance of oxidation (lithiation) was measured for three particles, and the average value was taken as the oxidation (lithiation) distance.
In addition, the oxidation (lithiation) distance was divided by D50 of the secondary particles of the precursor, and the obtained value was multiplied by 100 to obtain the oxidation (lithiation) distance rate according to formula (7).

$$\text{Oxidation (lithiation) distance rate} = (\text{oxidation (lithiation) distance})/\text{D50} \times 100 \ \ldots \ (7)$$

(Lithiation rate)

The carbon amount $C_i$ of the raw material mixed powder obtained by mixing metal nickel powder and lithium carbonate, and the carbon amount $C_o$ of the precursor were measured, and the proportion of lithium carbonate which was reduced in the oxidation step, that is, which reacted with metal nickel, was calculated according to formula (8). The reaction product was lithium metal oxide. It has been found that an increase in lithium metal oxide is likely to cause cracks within the precursor. In this respect, the lithiation rate can be used as an index of pulverizability.

$$\text{Proportion } M_{Li} \text{ of lithium carbonate that reacted with metal nickel} = (C_i - C_o)/C_o \ \ldots \ (8)$$

From the molar ratio ($M_{Ni/Li}$) of metal nickel to lithium carbonate in the raw material mixed powder and $M_{Li}$, the ratio of metal nickel that reacted with Li and converted to lithiation (lithiation rate) was calculated according to formula (9).

$$\text{Lithiation rate} = M_{Ni/Li} \times M_{Li} \dots (9)$$

(Amount of residual Li)

0.5 g of the positive-electrode active material and 30 ml of pure water were charged into a 50 ml poly container, and the inside of the poly container was replaced with argon gas. Then, the mixture was stirred for 1 hour to extract the Li component, and an extract liquid was obtained by suction filtration. 15 ml of the obtained extract liquid was diluted with pure water to about 40 ml and titrated with 0.02 M hydrochloric acid to analyze the amounts of the $Li_2CO_3$ component and the LiOH component in the extract liquid. An automatic titrator (COM-1700A, manufactured by Hiranuma) was used for the titration. The titration curve has two stages, and the equivalence point (x) in the first stage represents the reactions of formulas (10) and (11), and the equivalence point (y) in the second stage represents the reaction of formula (11). Since the number of moles of $Li_2CO_3$ in formula (10) was the same as the number of moles of HCl in formula (12), the amount of residual $Li_2CO_3$ was determined as the titration amount between the equivalence point in the first stage and the equivalence point in the second stage (y - x). The amount of residual LiOH was the titration amount up to the equivalence point in the first stage, but since formula (11) was also included in the titration amount up to the first stage, it was determined as formula (11), that is, the amount (2x - y) obtained by subtracting the amount of residual $Li_2CO_3$. In addition, the amount of Li in the residual $Li_2CO_3$ and the residual LiOH, that is, the amount of unreacted Li, was calculated. The number of moles of unreacted Li was divided by the number of moles of metal elements other than Li contained in the positive-electrode active material, and multiplied by 100 to calculate the unreacted Li rate.

$$LiOH + HCl \rightarrow LiCl + H_2O \qquad \dots (10)$$

$$Li_2CO_3 + HCl \rightarrow LiCl + LiHCO_3 \qquad \dots (11)$$

$$LiHCO_3 + HCl \rightarrow LiCl + CO_2 + H_2O \qquad \dots (12)$$

(Level of remaining metal Ni)

After removing $K\alpha 2$ from the XRD pattern obtained by measuring the precursors, the level of remaining metal Ni was calculated according to formula (13) from the peak intensity ($I_{NiO}$) of NiO at about $2\theta = 43.2°$, the peak intensity ($I_{LiNiO2}$) of $LiNiO_2$ at about $2\theta = 43.6°$, and the peak intensity ($I_{Ni}$) of metal Ni at about $2\theta = 44.5°$.

$$\text{Level of remaining metal Ni} = I_{Ni}/(I_{NiO} + I_{LiNiO2}) \dots (13)$$

[Oxidation step of metal nickel powder]

[Preliminary Experiment 1]

Metal nickel powder (manufactured by Nippon Atomized Metal Powders Corporation) having a D50 of 8 $\mu$m and produced by a water atomization method and lithium carbonate were weighed out so that the molar ratio of metal elements Li:Ni was 1.03:0.85. A total of 5 kg of the raw material powder was charged into a V-type mixer having a capacity of 45 L and mixed for 90 minutes to obtain a raw material mixed powder. Next, this raw material mixed powder was heat-treated in a firing furnace in an air atmosphere at 650°C for 10 hours to obtain oxide powder. Although part of the oxide powder was caked, it was possible to obtain oxide powder equivalent to a precursor having a D50 of 8 $\mu$m by crushing the powder in a mortar.

[Preliminary Experiment 2]

The same oxidation step as in Preliminary Experiment 1 was performed, except that metal nickel powder and lithium carbonate were weighed out so that the molar ratio of metal elements Li:Ni was 0.10:0.85. Although part of the oxide powder was caked, it was possible to obtain oxide powder having a D50 of 8 $\mu$m by crushing the powder in a mortar. In addition, the molar ratio of metal elements Li:Ni for mixing metal nickel powder and lithium carbonate being 0.10:0.85 means that metal nickel powder and 10% by mass of lithium-containing compounds required for production are mixed. In Preliminary Experiment 1, the same lithium-containing compounds were mixed in an amount of 100% by mass.

From Preliminary Experiment 1 and Preliminary Experiment 2, it was confirmed that, by mixing metal nickel powder with at least part of the lithium-containing compounds (here, lithium carbonate) required for production and then performing oxidation treatment, the metal nickel powder could be oxidized while being prevented from sintering. The reason is considered to be that the presence of the lithium-containing compounds among the metal nickel powder could prevent contact among the metal nickel powder and thereby prevent sintering of the metal nickel powder.

[Example 1]

Lithium carbonate, metal nickel powder, cobalt carbonate, manganese carbonate, titanium oxide, and aluminum oxide were prepared as raw materials, and the raw materials were weighed out so that the molar ratio of metal elements Li:Ni:Co:Mn:Ti:Al was 0.26:0.85:0.03:0.08:0.03:0.01. Further, lithium hydroxide was prepared separately and weighed out so that the molar ratio of metal elements, Li:metal elements other than lithium, was 0.77:1.00. The metal nickel powder used was metal nickel powder having D50 of 8 $\mu$m and produced by a water atomization method.

First, metal nickel powder and lithium carbonate equivalent to 25% by mass were charged into a V-type mixer and mixed for 90 minutes to obtain raw material mixed powder. Next, 100 g of the raw material mixed powder was loaded in a 150 mm square sagger and subjected to oxidation treatment (oxidation step) at 650°C for 10 hours in a firing furnace in an air atmosphere to obtain precursors containing oxidized metal nickel powder. The mass of the obtained precursors was increased by 17% compared to the raw material mixed powder. Calculation based on this mass increase rate confirmed that 68% of the metal nickel powder had become nickel oxide. In other words, the oxidation rate was 68%.

Furthermore, the raw materials of the metal element M composed of cobalt carbonate, manganese carbonate, titanium oxide, and aluminum oxide were pre-pulverized in a ball mill using zirconia balls of Φ5 mm as the pulverization media to obtain pre-pulverized powder of the metal element M. The pre-pulverized powder of the metal element M had a D50 of 1.2 $\mu$m.

Then, as shown in the flowchart of FIG. 3, the above-mentioned precursors, the pre-pulverized powder of the metal element M, and the lithium hydroxide equivalent to 75% by mass were dry-mixed, and calcined in an oxygen gas flow at 500°C for 20 hours in a firing furnace whose atmosphere had been replaced with oxygen gas. Thereafter, in the firing furnace whose atmosphere had been replaced with oxygen gas, the mixture was subjected to main calcining in an oxygen gas flow at 840°C for 10 hours. In this manner, positive-electrode active materials composed of lithium metal composite oxide were obtained.

[Example 2]

Precursors and positive-electrode active materials were manufactured in the same manner as in Example 1, except that the oxidation treatment temperature in the oxidation step was 550°C for 10 hours. The oxidation rate of the precursors was 49%.

[Comparative Example 1]

Precursors and positive-electrode active materials were manufactured in the same manner as in Example 1, except that the oxidation treatment temperature in the oxidation step was 400°C for 10 hours. The oxidation rate of the precursors was 7%.

[Comparative Example 2]

Precursors and positive-electrode active materials were manufactured in the same manner as in Example 1, except that the amount of the raw material mixed powder loaded in the sagger in the oxidation step was 500 g. The oxidation rate of the precursors was 77%. In this example, the loading amount was changed to see the change in the oxidation rate.

[Comparative Example 3]

In Comparative Example 3, the raw materials of the metal element M were used as the buffer material. Metal nickel powder, cobalt carbonate, manganese carbonate, titanium oxide, and aluminum oxide were prepared as the raw materials, and the raw materials were weighed out so that the molar ratio of metal elements Ni:Co:Mn:Ti:Al was 0.85:0.03:0.08:0.03:0.01. Further, lithium hydroxides were prepared and weighed out so that the molar ratio of metal elements, Li:metal elements other than lithium, was 1.03:1.00. The metal nickel powder used were metal nickel powder having a D50 of 8 $\mu$m and produced by a water atomization method.

First, the raw materials of the metal element M composed of cobalt carbonate, manganese carbonate, titanium oxide, and aluminum oxide were pre-pulverized in a ball mill using zirconia balls of Φ5 mm as the pulverization media to obtain pre-pulverized powder of the metal element M. The pre-pulverized powder of the metal element M had a D50 of 1.2 μm.

Next, the metal nickel powder and the pre-pulverized powder of the metal element M were charged into a V-type mixer and mixed for 90 minutes to obtain raw material mixed powder. Next, 50 g of the raw material mixed powder was loaded in a 150 mm square sagger and subjected to oxidation treatment (oxidation step) at 550°C for 10 hours in a firing furnace in an air atmosphere to obtain precursors containing oxidized metal nickel powder. The mass of the obtained precursors was increased by 7.7% compared to the raw material mixed powder. Calculation based on this mass increase rate confirmed that 62% of the metal nickel powder had become nickel oxide. In other words, the oxidation rate was 62%.

The precursors and the lithium hydroxide were dry-mixed, and calcined in an oxygen gas flow at 500°C for 20 hours in a firing furnace whose atmosphere had been replaced with oxygen gas. Thereafter, in the furnace whose atmosphere had been replaced with oxygen gas, the mixture was subjected to main calcining in an oxygen gas flow at 840°C for 10 hours. In this manner, positive-electrode active materials composed of lithium metal composite oxide were obtained.

[Comparative Example 4]

Precursors and positive-electrode active materials were manufactured in the same manner as in Comparative Example 3, except that the oxidation treatment temperature in the oxidation step was 500°C for 10 hours. The oxidation rate of the precursors was 42%.

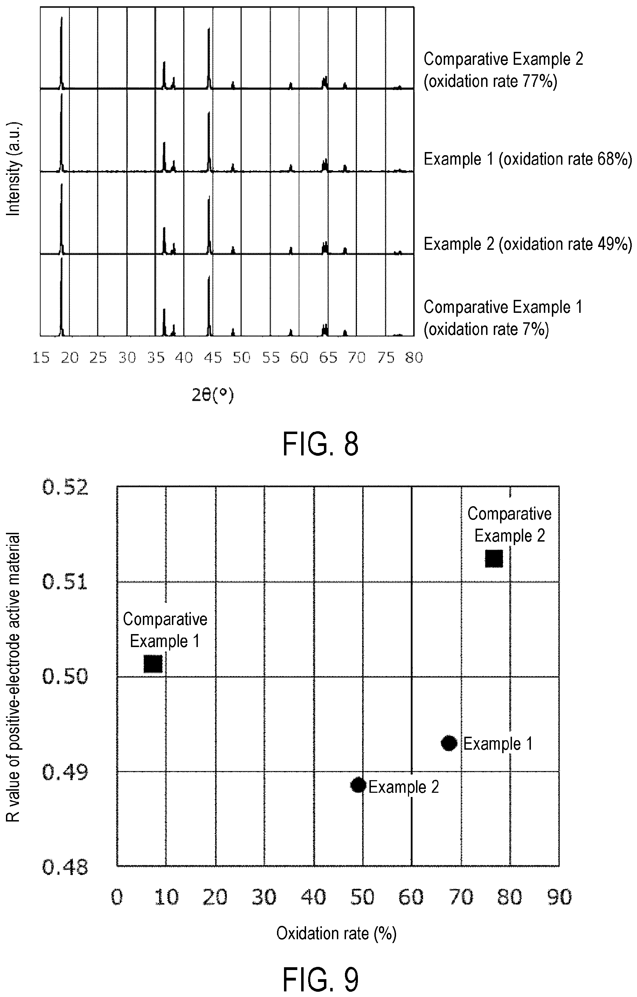

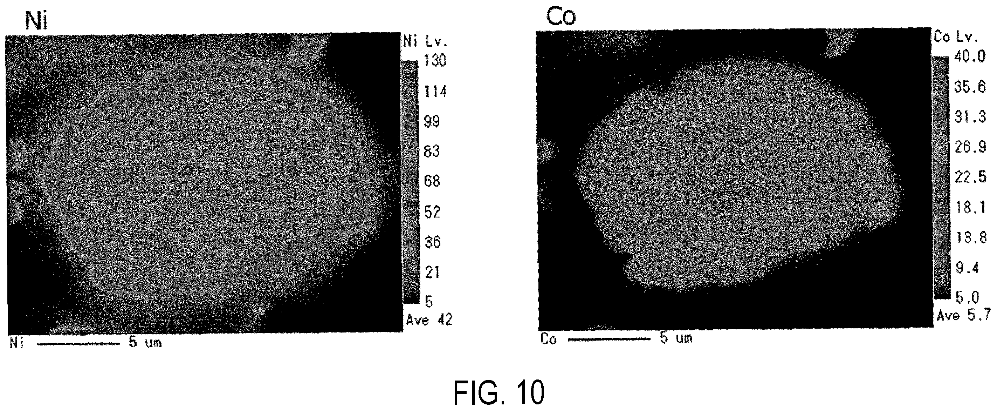

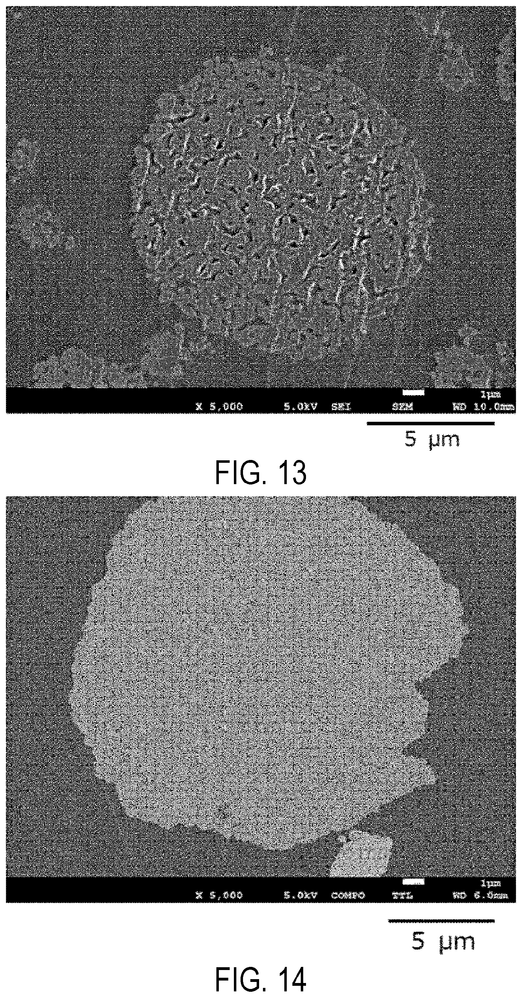

The oxidation rates of the precursors in Examples 1 and 2 and Comparative Examples 1 to 4 are shown in Table 1. In addition, X-ray powder diffraction measurement (XRD measurement) was performed on the precursors and positive-electrode active materials of Examples 1 and 2 and Comparative Examples 1 to 4. Among these, the XRD patterns of the precursors of Examples 1 and 2 and Comparative Examples 1 and 2 are shown in FIG. 7, and the XRD patterns of the positive-electrode active materials are shown in FIG. 8. Table 1 also shows the crystallite sizes of nickel oxide contained in the precursors calculated from the XRD measurement of the precursors and positive-electrode active materials of Examples 1 and 2, and Comparative Examples 1 to 4, as well as the above-mentioned $I_{NiO}$, $I_{LNO}$, $I_{Ni}$, $I_{LNO}/I_{Ni}$, and $T_{LNO}/I_{NiO}$, the level of remaining metal Ni, and the R value of the positive-electrode active materials. Further, the relationship between the oxidation rate and the R value in Examples 1 and 2 and Comparative Examples 1 and 2 is shown in FIG. 9. Furthermore, the particle cross section of the positive-electrode active materials of Example 1 was analyzed by an electron probe microanalyzer (EPMA). The results are shown in FIG. 10. In addition, FIG. 14 shows a cross-sectional SEM image of the positive-electrode active materials of Example 1.

[Table 1-1]

| | Preparation composition of positive-electrode active materials | Oxidation step of precursors | | | | |
|---|---|---|---|---|---|---|
| | | Metal nickel powder D50 (μm) | Buffer material | Oxidation treatment temperature (°C) | Oxidation treatment amount (g) | Oxidation rate of precursors (%) |
| Example 1 | $Li_{1.03}Ni_{0.85}Co_{0.03}Mn_{0.08}Ti_{0.03}Al_{0.01}O_2$ | 8 | Lithium carbonate | 650 | 100 | 68 |
| Example 2 | | 8 | | 550 | 100 | 49 |
| Comparative Example 1 | | 8 | | 400 | 100 | 7 |
| Comparative Example 2 | | 8 | | 650 | 500 | 77 |
| Comparative Example 3 | | 8 | Raw materials of metal element M | 550 | 50 | 62 |
| Comparative Example 4 | | 8 | | 500 | 50 | 42 |

[Table 1-2]

| | Precursors | | | | | | Positive-electrode active materials |
| --- | --- | --- | --- | --- | --- | --- | --- |
| | Crystallite size of nickel oxide (nm) | INiO | ILNO | INi | $I_{LNO}/I_{Ni}$ | $I_{LNO}/I_{NiO}$ | Level of remaining metal Ni | R value |
| Example 1 | 36 | 5400 | 10600 | 644 | 16.46 | 1.96 | 0.04 | 0.493 |
| Example 2 | 29 | 8000 | 1400 | 19200 | 0.07 | 0.18 | 2.04 | 0.489 |
| Comparative Example 1 | 21 | 1600 | 146 | 42000 | 0.00 | 0.09 | 24.05 | 0.501 |
| Comparative Example 2 | 113 | 19000 | 690 | 5700 | 0.12 | 0.04 | 0.29 | 0.512 |
| Comparative Example 3 | 37 | 13000 | 60 | 4600 | 0.01 | 0.00 | 0.35 | 0.602 |
| Comparative Example 4 | 34 | 9000 | 70 | 12700 | 0.01 | 0.01 | 1.40 | 0.651 |

From Table 1 (Table 1-1, Table 1-2) and FIG. 7, it was confirmed that in the precursors of Examples 1 and 2 and Comparative Examples 1 to 4, the metal nickel powder was oxidized, and part was nickel oxide. From FIG. 8, the positive-electrode active materials of Examples 1 and 2 and Comparative Examples 1 to 4 all showed peaks attributable to the 003 plane at about $2\theta = 18°$, the 101 plane at about $2\theta = 36°$, the 006 plane at about $2\theta = 37°$, the 012 plane at about $2\theta = 38°$, the 104 plane at about $2\theta = 44°$, the 015 plane at about $2\theta = 48°$, and the 107 plane at about $2\theta = 58°$, and it was confirmed that the positive-electrode active materials were lithium metal composite oxide with a layered structure belonging to the space group R3-m.

Further, from Table 1 and FIG. 9, it was confirmed that Examples 1 and 2, in which the oxidation rate was 10% to 70%, had a lower R value than Comparative Example 1, in which the oxidation rate was 7%, and Comparative Example 2, in which the oxidation rate was 77%, and that positive-electrode active materials with good crystallinity were obtained. From this, it was found that the oxidation rate is preferably 10% or more and 70% or less. It was also confirmed that when the oxidation rate was 49% or more and the crystallite size of the nickel oxide contained in the precursors was 100 nm or less, the R value was low. In addition, the oxidation rate in Example 1 was 68%, whereas the oxidation rate in Comparative Example 2 was as high as 77%. The increase in the oxidation rate is considered a result of the change in the loading amount, which in turn changed the airflow in the atmosphere and increased the amount of oxygen supplied to the metal nickel powder. Therefore, the oxidation rate of the metal nickel powder can be controlled not only by the oxidation treatment temperature but also by the time and heat treatment atmosphere.

According to Table 1, the oxidation rates of the precursors of Examples 1 and 2 using lithium carbonate as the buffer material and the precursors of Comparative Examples 3 and 4 using the raw materials of the metal element M as the buffer material were equivalent. On the other hand, according to $I_{LNO}/I_{Ni}$ in Table 1, the precursors of Examples 1 and 2 had lithium metal oxide (LNO) in addition to Ni oxide (NiO), but the precursors of Comparative Examples 3 and 4 hardly showed any formation of lithium metal oxide. Moreover, it was confirmed that the positive-electrode active materials of Examples 1 and 2 had a low R value of 0.500 or less compared to the positive-electrode active materials of Comparative Examples 3 and 4, and positive-electrode active materials with good crystallinity were obtained. That is, despite that the oxidation rates were equivalent, when the precursors of Examples 1 and 2 containing lithium metal oxide were used, positive-electrode active materials with good crystallinity were obtained compared to the case where the precursors of Comparative Examples 3 and 4 containing no lithium metal oxide were used. From the above, it was found that positive-electrode active materials with good crystallinity can be obtained by including lithium metal oxide in the precursors, and it was found that $I_{LNO}/I_{Ni}$ is preferably 0.02 or more. Furthermore, since it is necessary to use a lithium-containing compounds as the buffer material in order to generate lithium metal oxide in the precursors, it was confirmed that the use of lithium-containing compounds as the buffer material makes it possible to manufacture positive-electrode active materials with good crystallinity.

Moreover, from the observation of FIG. 10, it was confirmed that nickel and cobalt were uniformly present inside the positive-electrode active materials, and that cobalt was diffused in the metal nickel powder. From this, it was confirmed that when appropriate precursors are used, positive-electrode active materials with a uniform composition can be manufactured without performing the pulverization step during the manufacturing process. This can also be confirmed by the SEM image of FIG. 14, for which the pulverization step was not performed, that no voids were observed and dense positive-electrode active materials were formed.

As described above, by using the precursors of the present invention, the acid dissolution step and the coprecipitation step were not required, and positive-electrode active materials could be manufactured simply and easily. In addition, since positive-electrode active materials can be manufactured by performing oxidation treatment without compounds such as nickel sulfate or nickel hydroxide and without pulverizing the metal nickel powder, the manufacturing process is shortened and the amount of transportation during the manufacturing process is reduced. Furthermore, compared to nickel sulfate, nickel hydroxide, or the like, metal nickel powder has a higher nickel content and a larger specific gravity, so that the volume to be transported is decreased and the energy required for transportation (transportation costs, etc.) can be reduced. These can reduce the amount of greenhouse gas (GHG) emissions by about 30% to 40%, and as a result, positive-electrode active materials can be manufactured with reduced GHG emissions.

Additionally, while the production of nickel sulfate and nickel hydroxide requires water, in the present invention, the positive-electrode active materials can be manufactured by oxidizing metal nickel powder, so the amount of water used can be significantly reduced. Furthermore, when nickel hydroxide is generated, by-products such as sodium sulfate are generated, which must be disposed. In the present invention, no by-products are generated. Therefore, there is no need to handle the waste, and the positive-electrode active materials can be manufactured with less environmental impact.

Next, the influence on the particle size of the metal nickel powder and the electrochemical characteristics of the positive-electrode active materials will be described, followed by examples in which lithium-containing compounds were added separately.

[Reference Example 1]

Precursors were manufactured in the same manner as in Example 1, except that metal nickel powder having D50 of 30 $\mu$m were used, and then positive-electrode active materials were manufactured in the same manner as in Example 1.

[Reference Example 2]

Precursors were manufactured in the same manner as in Example 1, except that metal nickel powder having D50 of 70 $\mu$m were used, and then positive-electrode active materials were manufactured in the same manner as in Example 1.

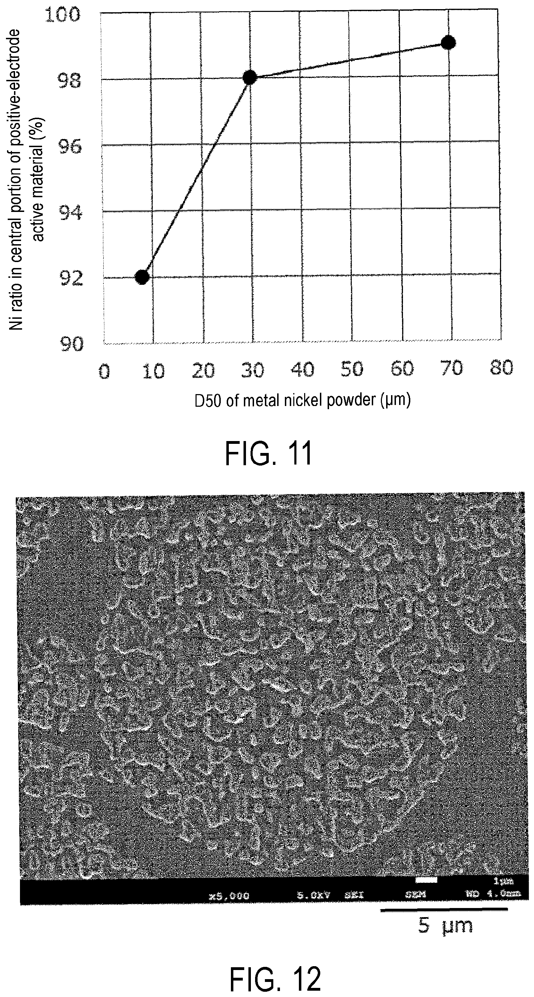

The XRDs of the positive-electrode active materials of Reference Examples 1 and 2 were measured to calculate the R values. The results are shown in Table 2. In addition, the Ni ratio in the central portion of the particle cross section of the positive-electrode active materials was measured by scanning electron microscope-energy dispersive X-ray spectroscopy (SEM-EDX). The results are shown in Table 2. Further, FIG. 11 shows the relationship between D50 of the metal nickel powder and the Ni ratio in the central portion of the positive-electrode active materials. Table 2 also shows the results of Example 1. Based on the above, the influence of D50 of the metal nickel powder was evaluated.

[Table 2]

| | Preparation composition of positive-electrode active materials | Precursors | | Positive-electrode active materials | |
|---|---|---|---|---|---|
| | | Metal nickel powder D50 ($\mu$m) | Oxidation rate (%) | R value | Ni ratio in the central portion (%) |
| Example 1 | $Li_{1.03}Ni_{0.85}Co_{0.03}Mn_{0.08}Ti_{0.03}Al_{0.01}O_2$ | 8 | 68 | 0.493 | 92 |
| Reference Example 1 | | 30 | 41 | 0.580 | 98 |
| Reference Example 2 | | 70 | 20 | 0.773 | 99 |

From Table 2 and FIG. 11, when D50 of the metal nickel powder was 30 $\mu$m or more, the R value was high, the crystallinity was low, and the Ni ratio in the central portion of the positive-electrode active materials increased. In other words, it was found that metal elements other than nickel and lithium were difficult to diffuse to the central portion. On the other hand, as shown in FIG. 11, when D50 of the metal nickel powder was 20 $\mu$m or less, the Ni ratio in the central portion of the positive-electrode active materials was about 95%, showing that metal elements other than nickel and lithium were easily diffused. When metal elements other than lithium are diffused more widely, the composition of the positive-electrode active materials becomes more uniform and the electrochemical characteristics expected from the target composition can be obtained, which is preferred. Based on the above, if D50 of the metal nickel powder is 20 $\mu$m or less, the metal nickel powder can be used directly as a raw material, and there is no need to pulverize the powder afterward, so that the pulverization step can be omitted to simplify the manufacturing process.

On the other hand, despite that D50 of the metal nickel powder exceeds 20 $\mu$m, if crude precursors (precursors of Reference Examples 1 and 2) containing nickel oxide with an oxidation rate of 10% or more and 70% or less is pulverized to 20 $\mu$m or less for use, as in the examples, metal elements other than nickel and lithium can diffuse to the central portion during the manufacturing process of the positive-electrode active materials, the composition becomes uniform, and it can be said that the desired electrochemical characteristics can be obtained.

[Example 3]

Lithium carbonate, metal nickel powder, cobalt carbonate, manganese carbonate, titanium oxide, and aluminum oxide were prepared as raw materials, and the raw materials were weighed out so that the molar ratio of metal elements Li:Ni:Co:Mn:Ti:Al was 1.03:0.85:0.03:0.08:0.03:0.01. The metal nickel powder used was metal nickel powder having D50 of 8 $\mu$m and produced by a water atomization method.

In this example, lithium carbonate equivalent to 100% by mass and metal nickel powder were charged into a V-type mixer and mixed for 90 minutes to obtain raw material mixed powder. Next, this raw material mixed powder was subjected to oxidation treatment (oxidation step) in a firing furnace in an air atmosphere at 650°C for 10 hours to obtain precursors containing oxidized metal nickel powder.

Next, following the flow shown in FIG. 4, the obtained precursors were mixed with raw materials of the metal element M composed of cobalt carbonate, manganese carbonate, titanium oxide, and aluminum oxide, and pure water was added thereto so that the solid content ratio became 30% by mass. Then, the mixture was wet-pulverized in a pulverizer to prepare a raw material slurry having a D50 of primary particles of 0.3 $\mu$m (pulverization step). Next, the obtained raw material slurry was spray-dried using a nozzle-type spray dryer (Model ODL-20, manufactured by Ohkawara Kakohki Co., Ltd.) to obtain granulated powder having a D50 of about 10 $\mu$m (granulation step). Since in this example the entire amount of lithium required for manufacturing the desired positive-electrode active materials was contained in the precursors, the steps of adding and mixing lithium-containing compounds were not performed. The dried granulated powder was then calcined to obtain lithium metal composite oxide (calcination step). Specifically, the mixture was calcined in an oxygen gas flow at 700°C for 24 hours in a firing furnace whose atmosphere had been replaced with oxygen gas. Thereafter, the mixture was subjected to main calcining in an oxygen gas flow at 840°C for 10 hours in a firing furnace whose atmosphere had been replaced with oxygen gas, thereby obtaining lithium metal composite oxide. The calcined powder obtained by the calcination step was classified using a sieve with an opening size of 53 $\mu$m, and the powder that fell below the sieve was used as the positive-electrode active materials.

[Example 4]

Lithium carbonate, metal nickel powder, cobalt carbonate, manganese carbonate, titanium oxide, and aluminum oxide were prepared as raw materials, and the raw materials were weighed out so that the molar ratio of metal elements Li:Ni:Co:Mn:Ti:Al was 1.03:0.85:0.03:0.08:0.03:0.01. The metal nickel powder used was metal nickel powder having a D50 of 8 $\mu$m and produced by a water atomization method.

First, 50% by mass of lithium carbonate (pre-added) and metal nickel powder were charged into a V-type mixer so that the molar ratio of lithium and nickel Li:Ni was 0.52:0.85, and mixed for 90 minutes to obtain raw material mixed powder. Next, this raw material mixed powder was subjected to oxidation treatment (oxidation step) in a firing furnace in an air atmosphere at 650°C for 10 hours to obtain precursors containing oxidized metal nickel powder.

Next, following the flow shown in FIG. 5, the obtained precursors were mixed with raw materials of the metal element M composed of cobalt carbonate, manganese carbonate, titanium oxide, and aluminum oxide, and pure water was added thereto so that the solid content ratio became 30% by mass. Then, the mixture was wet-pulverized in a pulverizer to prepare a raw material slurry having a D50 of primary particles of 0.30 $\mu$m (pulverization step). Next, the obtained raw material slurry was spray-dried using a nozzle-type spray dryer (Model ODL-20, manufactured by Ohkawara Kakohki Co., Ltd.) to obtain granulated powder having a D50 of about 10 $\mu$m (granulation step). This granulated powder and 50% by mass of the remaining lithium carbonate (post-added) were charged into a V-type mixer and mixed for 90 minutes to obtain mixed granulated powder. In this example, steps of adding and mixing lithium-containing compounds were performed. Then, this mixed granulated powder was calcined to obtain lithium metal composite oxide (calcination step). Specifically, the mixture was calcined in an oxygen gas flow at 700°C for 24 hours in a firing furnace whose atmosphere had been replaced with oxygen gas. Thereafter, the mixture was subjected to main calcining in an oxygen gas flow at 840°C for 10 hours in a calcining furnace whose atmosphere had been replaced with oxygen gas, thereby obtaining lithium metal composite oxide. The calcined powder obtained by the calcination step was classified using a sieve with an opening size of 53 $\mu$m, and the powder that fell below the sieve was used as the positive-electrode active materials.

[Example 5]

Precursors and positive-electrode active materials were manufactured in the same manner as in Example 4, except that 25% by mass of lithium carbonate and metal nickel powder were charged into a V-type mixer so that the molar ratio of lithium and nickel Li:Ni was 0.26:0.85, and the calcining temperature in the main calcining was 820°C. The calcining temperature was lowered for the following reasons. By mixing 25% by mass of lithium carbonate before the oxidation step and adding the remaining 75% by mass after the granulation step, the amount of lithium carbonate in the mixed granulated powder is reduced. As a result, the oxidized metal nickel powder is brought close to each other in the mixed granulated powder, accelerating the reaction and lowering the appropriate calcining temperature.

In Examples 3 to 5, the influence of the mixing amount of pre-addition and post-addition of the lithium-containing compounds was examined. That is, when the amount of the lithium compounds required for manufacturing the desired positive-electrode active materials was taken as 100% by mass, the amount of the lithium-containing compounds mixed before the oxidation step was 100% by mass in Example 3, 50% by mass in Example 4, and 25% by mass in Example 5 (pre-addition). In Examples 4 and 5, the remaining amount of lithium compounds was mixed after the granulation step, and was post-added.

Cross-sectional SEM observation was performed on the positive-electrode active materials of Examples 3 and 5 having significantly different mixing amounts. A photograph of Example 3 is shown in FIG. 12, and a photograph of Example 5 is shown in FIG. 13. In addition, the oil absorption of the positive-electrode active materials of the positive-electrode active materials of Examples 3 to 5 and the particle strength of Examples 3 to 5 were measured. This is shown in Table 3.

(Preparation of positive electrode)

Next, the positive-electrode active materials synthesized in Examples 3 to 5 were used as the positive electrode materials to manufacture lithium-ion secondary batteries, and the initial capacity and capacity retention rate of the lithium-ion secondary batteries were measured. First, the prepared positive-electrode active materials, a carbon-based conductive material, and a binder previously dissolved in N-methyl-2-pyrrolidone (NMP) were mixed in a mass ratio of 92.5:5:2.5. The uniformly mixed positive electrode mixture slurry was then applied onto a positive electrode current collector of an aluminum foil having a thickness of 15 $\mu$m so that the coating amount was 13 mg/cm$^2$. Next, the positive electrode mixture slurry applied to the positive electrode current collector was heat-treated at 120°C, and the solvent was distilled off to form a positive electrode mixture layer. Thereafter, the positive electrode mixture layer was pressure-molded by a hot press and punched into a circular shape with a diameter of 15 mm to form a positive electrode.

(Initial capacity, charge/discharge cycle characteristics (capacity retention rate))

Subsequently, a lithium-ion secondary battery was manufactured using the prepared positive electrode, a negative electrode, and a separator. Metal lithium punched into a circular shape with a diameter of 16 mm was used as the negative electrode. The separator used was a porous polypropylene separator having a thickness of 30 $\mu$m. The positive electrode and the negative electrode were opposed to each other in a non-aqueous electrolyte solution with the separator interposed therebetween to form the lithium-ion secondary battery. The non-aqueous electrolyte solution used was a solution obtained by dissolving $LiPF_6$ at a concentration of 1.0 mol/L in a solvent in which ethylene carbonate and dimethyl carbonate were mixed at a volume ratio of 3:7.

The produced lithium-ion secondary battery was charged in an environment of 25°C at a constant current/constant voltage of 38 A/kg based on the mass of the positive electrode mixture and an upper limit potential of 4.3 V. Then, the battery was discharged to a lower limit potential of 2.5 V at a constant current of 40 A/kg based on the mass of the positive electrode mixture, and the charge capacity and discharge capacity were measured. Thereafter, the battery was charged at a constant current/constant voltage of 190 A/kg based on the mass of the positive electrode mixture and an upper limit potential of 4.3 V. Then, a total of 30 cycles of discharging to a lower limit potential of 2.5 V at a constant current of 190 A/kg based on the mass of the positive electrode mixture were performed, and the discharge capacity after the 30 cycles was measured. The ratio of the discharge capacity after 30 cycles to the initial capacity was calculated as the capacity retention rate. The results are shown in Table 3.

[Table 3]

| | Preparation composition of positive-electrode active materials | Metal nickel powder D50 ($\mu$m) | Pre-addition | Post-addition | Positive-electrode active materials | | Lithium-ion secondary battery | |
|---|---|---|---|---|---|---|---|---|
| | | | Amount of lithium carbonate added before oxidation step (mass%) | Amount of lithium carbonate added after granulation step (mass%) | Oil absorption (ml/100 g) | Particle strength (MPa) | Initial capacity (Ah/kg) | Capacity retention rate (%) |
| Example 3 | $Li_{1.03}Ni_{0.85}Co_{0.03}Mn_{0.08}Ti_{0.03}Al_{0.01}O_2$ | 8 | 100 | 0 | 50 | 9 | 195 | 81 |
| Example 4 | | 8 | 50 | 50 | 38 | 27 | 187 | 90 |
| Example 5 | | 8 | 25 | 75 | 30 | 35 | 190 | 91 |

From the cross-sectional SEM images of FIG. 12 and FIG. 13, it can be seen that the positive-electrode active materials of Example 5, in which the amount of lithium carbonate mixed before the oxidation step was 25% by mass, had a structure with fewer voids than the positive-electrode active materials of Example 3, in which the amount of lithium carbonate mixed before the oxidation step was 100% by mass. It is considered that if the granulated powder contains a large amount of lithium carbonate and has oxidized metal nickel powder scattered throughout, the structure has many voids after calcining. Therefore, in Example 3 in which a large amount of lithium carbonate was present in the granulated powder, the oxidized metal nickel was scattered, resulting in a structure with many voids after calcining. On the other hand, in Examples 4 and 5 in which the amount of lithium carbonate mixed before the oxidation step was reduced, the amount of lithium carbonate in the granulated powder was reduced, eliminating the scattering of the oxidized metal nickel powder and thereby obtaining a structure with fewer voids. Therefore, the oil absorption decreased with the decrease in the amount of lithium carbonate mixed before the oxidation step. The decrease in the oil absorption indicates that the voids in the positive-electrode active materials were decreased. As a result, it was found that the particle strength was high.

As can be seen from Table 3, the positive-electrode active materials of Examples 3 to 5 had a high initial capacity of 187 Ah/kg or more. Moreover, in Examples 4 and 5 in which the amount of lithium carbonate mixed before the oxidation step was 50% by mass or less, the capacity retention rate was good at 90% or more. In other words, it was confirmed that by setting the amount of lithium carbonate mixed before the oxidation step to 50% by mass or less, positive-electrode active materials with few voids and high strength were obtained, and as a result, good cycle characteristics were achieved.

Next, a preliminary experiment on the pulverization step of the crude precursors will be described, followed by examples.

[Preliminary Experiment 3]

Carbon amount measurement and cross-sectional SEM observation were performed for the crude precursors of Reference Example 2, and the above-mentioned lithiation rate, oil absorption, and oxidation (lithiation) distance were calculated. The results are shown in Table 4.

Next, the crude precursors of Reference Example 2 were mixed with raw materials of the metal element M composed of cobalt carbonate, manganese carbonate, titanium oxide, and aluminum oxide, and 200 g of this mixed powder was placed in a plastic pot container, to which 200 g of pure water and 200 g of zirconia balls (manufactured by Nikkato) having a ball diameter of 5 mm were added as media. The mixture was pulverized at a rotation speed of 90 rpm for 64 hours to obtain a pulverized slurry (coarse pulverization step). D50 after coarse pulverization was 2.9 $\mu$m and D95 was 10.1 $\mu$m.

Next, in order to finely pulverize the obtained pulverized slurry, wet pulverization was performed in a pulverizer, but fine pulverization was not possible. The reason for this will be explained later.

[Example 6]

Lithium carbonate, metal nickel powder, cobalt carbonate, manganese carbonate, titanium oxide, and aluminum oxide were prepared as raw materials, and the raw materials were weighed out so that the molar ratio of metal elements Li:Ni:Co:Mn:Ti:Al was 1.03:0.85:0.03:0.08:0.03:0.01. The metal nickel powder used was metal nickel powder having a D50 of 70 $\mu$m and a D95 of 176 $\mu$m. 25% by mass of lithium carbonate and metal nickel powder were charged into a V-type mixer so that the molar ratio of lithium and nickel Li:Ni was 0.26:0.85. The mixture was mixed for 120 minutes to obtain raw material mixed powder. Next, this raw material mixed powder was subjected to oxidation treatment (oxidation step) in a firing furnace in an air atmosphere at 700°C for 4 hours to obtain crude precursors containing oxidized metal nickel powder. The oxidation rate was 69%. In addition, the carbon amount of the crude precursors was measured, cross-sectional SEM observation and XRD measurement were performed, and the above-mentioned lithiation rate, oil absorption, oxidation (lithiation) distance, oxidation (lithiation) distance rate, $I_{LNO}/I_{Ni}$, and $I_{LNO}/I_{NiO}$ were calculated. The results are shown in Table 4.

Next, following the flow shown in FIG. 6, the obtained crude precursors were mixed with raw materials of the metal element M composed of cobalt carbonate, manganese carbonate, titanium oxide, and aluminum oxide, and 200 g of this mixed powder was placed in a plastic pot container, to which 200 g of pure water and 200 g of zirconia balls (manufactured by Nikkato) having a ball diameter of 5 mm were added as media. The mixture was pulverized at a rotation speed of 90 rpm for 64 hours to obtain a pulverized slurry (coarse pulverization step). The particle size distribution after coarse pulverization was measured. The results are shown in Table 4.

Next, in order to finely pulverize the obtained pulverized slurry, the pulverized slurry was wet-pulverized in a pulverizer to prepare a raw material slurry having a D50 of 0.3 $\mu$m (fine pulverization step). The particle size distribution after fine pulverization is shown in Table 4. Subsequently, the obtained raw material slurry was spray-dried using a nozzle-type spray dryer (Model ODL-20, manufactured by Ohkawara Kakohki Co., Ltd.) to obtain granulated powder having a D50 of about 10 $\mu$m (granulation step). Then, the dried granulated powder and 75% by mass of the remaining lithium carbonate were charged into a V-type mixer so that the molar ratio of lithium and nickel Li:Ni was 1.03:0.85, thereby obtaining mixed granulated powder. The obtained mixed granulated powder was calcined to obtain lithium metal composite oxide (calcination step). Specifically, the mixture was calcined in an oxygen gas flow at 700°C for 24 hours in a firing furnace whose atmosphere had been replaced with oxygen gas. Thereafter, the mixture was subjected to main calcining in an oxygen gas flow at 820°C for 10 hours in a firing furnace whose atmosphere had been replaced with oxygen gas, thereby obtaining lithium metal composite oxide. The calcined powder obtained by the calcination step was classified using a sieve with an opening size of 53 $\mu$m, and the powder that fell below the sieve was used as the positive-electrode active materials.

[Examples 7 to 9]

Crude precursors were obtained in the same manner as in Example 6, except that the oxidation treatment time in the oxidation step was changed to 8 hours in Example 7, 10 hours in Example 8, and 30 hours in Example 9, and positive-electrode active materials were manufactured through the same method. Similarly, the level of oxidation, lithiation rate, oil absorption, oxidation (lithiation) distance, oxidation (lithiation) distance rate, $I_{LNO}/I_{Ni}$, $I_{LNO}/I_{NiO}$, and level of remaining metal Ni were calculated for the crude precursors. In addition, the particle size distribution after coarse pulverization and after fine pulverization was measured. The results are shown in Table 4.

Next, in order to investigate the influence of the powder characteristics of the precursors on the powder characteristics and electrochemical characteristics of the positive-electrode active materials, the amount of residual LiOH, the amount of residual $Li_2CO_3$, unreacted Li rate, specific surface area, oil absorption, and R value of the positive-electrode active materials obtained in Examples 6 to 9 were obtained. The results are shown in Table 5. Further, a positive electrode and a lithium-ion secondary battery were manufactured in the same manner as in Examples 3 to 5, the initial capacity was measured, and the Coulombic efficiency and the charge/discharge cycle characteristics (capacity retention rate) were evaluated. The results are shown in Table 5. Coulombic efficiency is a battery characteristic expressed as discharge capacity/charge capacity, and indicates the proportion of Li ions that can return to the positive electrode material through discharge among the Li ions released during the first charge. Therefore, it can be said that the higher this value, the better the characteristics.

[Table 4-1]

| | Preparation composition of positive-electrode active materials | Oxidation step | | | | Precursors | | | | |
|---|---|---|---|---|---|---|---|---|---|---|
| | | Metal nickel powder D50 ($\mu$m) | Oxidation treatment temperature (°C) | Oxidation treatment time (h) | Amount of lithium carbonate added before oxidation step (mass%) | Metal nickel oxidation rate (%) | Metal nickel lithiation rate (%) | Oil absorption (ml/100 g) | Oxidation (lithiation) distance ($\mu$m) | Oxidation (lithiation) distance rate (%) |
| Reference Example 2 | $Li_{1.03}Ni_{0.85}Co_{0.03}Mn_{0.08}Ti_{0.03}Al_{0.01}O_2$ | 70 | 650 | 10 | 25 | 20 | 7 | 8 | 75 | 11 |
| Example 6 | | 70 | 700 | 4 | 25 | 69 | 12 | 16 | 15 | 22 |
| Example 7 | | 70 | 700 | 8 | 25 | 67 | 16 | 17 | | - |
| Example 8 | | 70 | 700 | 10 | 25 | 66 | 20 | 18 | 35 | 50 |
| Example 9 | | 70 | 700 | 30 | 25 | 65 | 28 | 17 | - | - |

[Table 4-2]

| | Precursors | | | | | | | | | Pulverization step | | | |
|---|---|---|---|---|---|---|---|---|---|---|---|---|---|
| | | | | | | | | | | After coarse pulverization | | After fine pulverization | |
| | $I_{NiO}$ | $I_{LNO}$ | $I_{Ni}$ | $I_{LNO}/I_{Ni}$ | $I_{LNO}/I_{Nio}$ | Level of remaining metal Ni | NiO phase crystallite size (nm) | LNO phase crystallite size (nm) | Metal nickel phase crystallite size (nm) | D50 (μm) | D95 (μm) | D50 (μm) | D95 (μm) |
| Reference Example 2 | - | - | - | - | - | - | - | - | - | 2.9 | 10.1 | Unable to be finely pulverized | |
| Example 6 | 3446 | 1203 | 264 | 5 | 0.35 | 0.06 | 125 | 24 | 164 | 1.2 | 2.7 | 0.26 | 0.45 |
| Example 7 | 2712 | 1907 | 146 | 13 | 0.70 | 0.03 | 103 | 27 | 142 | 1.3 | 3.0 | 0.28 | 0.49 |
| Example 8 | 3049 | 2492 | 123 | 20 | 0.82 | 0.02 | 134 | 29 | 111 | 1.3 | 2.4 | 0.28 | 0.45 |
| Example 9 | 1431 | 3321 | 110 | 30 | 2.32 | 0.02 | 166 | 30 | 60 | 1.5 | 3.0 | 0.29 | 0.5 |

[Table 5]

| | Preparation composition of positive-electrode active materials | Positive-electrode active materials | | | | | | Lithium-ion secondary battery | | | |
|---|---|---|---|---|---|---|---|---|---|---|---|
| | | Residual LiOH (%) | Residual Li2CO3 (%) | Unreacted lithiation rate (%) | Specific surface area (m2/g) | Oil absorption (ml/100 g) | R value | Initial charge capacity (Ah/kg) | Initial discharge capacity (Ah/kg) | Coulombic efficiency (%) | Capacity retention rate (%) |
| Example 6 | $Li_{1.03}Ni_{0.85}Co_{0.03}Mn_{0.08}Ti_{0.03}Al_{0.01}O_2$ | 1.30 | 1.34 | 9 | 0.18 | 36 | 0.41 | 217 | 180 | 82.9 | 87 |
| Example 7 | | 0.32 | 0.13 | 5 | 0.77 | 32 | 0.45 | 220 | 187 | 84.8 | 91 |
| Example 8 | | 0.37 | 0.25 | 2 | 0.87 | 27 | 0.45 | 223 | 191 | 85.9 | 91 |
| Example 9 | | 0.40 | 0.56 | 3 | 0.79 | 28 | 0.43 | 219 | 188 | 86.1 | 90 |

As seen from Table 4, even when metal nickel powder having a D50 of 70 μm was used as in Examples 6 to 9, precursors with an oxidation rate of 65% or more was obtained while preventing sintering by mixing (pre-adding) lithium carbonate before the oxidation step. It was also found that the lithiation rate increased as the oxidation treatment time became longer, the unreacted Li rate decreased, the reaction between the lithium source and the metal source such as nickel progressed, and the formation of lithium metal oxide progressed. The lithiation rate can be used as an index of pulverizability, and it can be said that as the lithiation rate increased, the amount of lithium metal oxide in the precursors increased, and the volume expansion made it easy for cracks to occur in the precursors. In addition, in the precursors of Examples 6 to 9 in which the lithiation rate was 12% or more, the oil absorption of the precursors was 16 to 18 ml/100 g, which was a considerable increase from 8 ml/100 g in Reference Example 2, in which the lithiation rate was 7%. This also indicates that the number of cracks inside the precursors increased. As a result, in Examples 6 to 9, D95 after coarse pulverization was 3 μm or less, making fine pulverization possible. On the other hand, the lithiation rate in Reference Example 2 was low at less than 10%, and there were few cracks, which is thought to be why fine pulverization was not possible.

Furthermore, as can be seen from Table 5, as positive-electrode active materials, the higher the Lithiation rate of the precursors is, the smaller the unreacted Li rate of the positive-electrode active materials is. Positive-electrode active materials having good crystallinity and a R value of 0.500 or less are obtained, and good results are obtained in terms of the initial capacity, Coulombic efficiency, and capacity retention rate. For this reason, it can be said that by setting the lithiation rate of the precursors to 10% or more, the reaction $Li + M + O_2 \rightarrow LiMO_2$ (M = Ni, Co, Mn, etc.) is promoted, and electrochemical characteristics such as the initial capacity are also improved.

From the above results, it was found that a lithium-ion secondary battery with a stable crystal structure and good electrochemical characteristics can be obtained by appropriately reacting metal nickel powder with part of Li in the oxidation step in the production of the precursors.

Next, an additional example in which the amount of the lithium-containing compounds mixed (pre-added) before the oxidation step was reduced will be described.

[Example 10]

Precursors and positive-electrode active materials were manufactured in the same manner as in Example 8, except that 10% by mass of lithium carbonate and metal nickel powder were charged into a V-type mixer so that the molar ratio of lithium and nickel Li:Ni was 0.10:0.85. The oil absorption, particle strength, initial capacity, and capacity retention rate were measured. The results are shown in Table 6. In addition, in order to compare the influence of the amount of lithium carbonate added on the oil absorption and particle strength, data of Examples 3 to 5 and Example 8 is also shown in Table 6.

[Table 6]

|  | Preparation composition of positive-electrode active materials | Precursors | Pre-addition | Post-addition | Positive-electrode active materials | | Lithium-ion secondary battery | |
|---|---|---|---|---|---|---|---|---|
|  |  | Metal nickel powder D50 ($\mu$m) | Amount of lithium carbonate added before oxidation step (mass%) | Amount of lithium carbonate added after granulation step (mass%) | Oil absorption (ml/100 g) | Particle strength (MPa) | Initial capacity (Ah/kg) | Capacity retention rate (%) |
| Example 3 | $Li_{1.03}Ni_{0.85}Co_{0.03}Mn_{0.08}Ti_{0.03}Al_{0.01}O_2$ | 8 | 100 | 0 | 50 | 9 | 195 | 81 |
| Example 4 | | 8 | 50 | 50 | 38 | 27 | 187 | 90 |
| Example 5 | | 8 | 25 | 75 | 30 | 35 | 190 | 91 |
| Example 8 | | 70 | 25 | 75 | 28 | 45 | 191 | 91 |
| Example 10 | | 70 | 10 | 90 | 24 | 59 | 190 | 90 |

As shown in Table 6, it was confirmed that positive-electrode active materials can be manufactured even if the amount of lithium carbonate added before the oxidation step is 10% by mass. Furthermore, the oil absorption, which is an index of the void volume, decreases with a decrease in the amount of lithium carbonate added before the oxidation step, and the void volume can be controlled by the amount of lithium carbonate added before the oxidation step. That is, it was reconfirmed that positive-electrode active materials having high particle strength can be obtained by reducing the amount of lithium carbonate pre-added to form a structure with fewer voids. By giving the particles such high strength, it is possible to apply strong shear force when manufacturing the positive electrode, for example, which makes it possible to shorten the kneading step of the positive electrode mixture slurry and increase the press pressure to manufacture a high-density positive electrode.

**Claims**

1. A method for manufacturing a precursor of a positive-electrode active material for a lithium-ion secondary battery, the method comprising:

   a mixing step of mixing metal nickel powder and a lithium-containing compound; and
   an oxidation step of oxidizing the metal nickel powder after mixing,
   wherein the oxidation step forms a precursor comprising nickel oxide having an oxidation rate of 10% or more and 70% or less, and the oxidation rate indicates a ratio of an amount of oxidized nickel to a total amount of Ni contained.

2. The method for manufacturing the precursor of the positive-electrode active material for the lithium-ion secondary battery according to claim 1, wherein the metal nickel powder has an average particle size of 20 $\mu$m or less.

3. The method for manufacturing the precursor of the positive-electrode active material for the lithium-ion secondary battery according to claim 1, wherein in response to an average particle size of the metal nickel powder exceeding 20 $\mu$m, a lithiation rate is increased to 10% or more through the oxidation step.

4. The method for manufacturing the precursor of the positive-electrode active material for the lithium-ion secondary battery according to any one of claims 1 to 3, wherein the oxidation step oxidizes in an oxidizing atmosphere less than a melting point of the lithium-containing compound.

5. The method for manufacturing the precursor of the positive-electrode active material for the lithium-ion secondary battery according to any one of claims 1 to 4, wherein in response to an amount of a lithium compound required for manufacturing the positive-electrode active material for the lithium-ion secondary battery being set to 100% by mass, a mixing amount of the lithium-containing compound in the mixing step is 10% by mass or more and 100% by mass or less.

6. The method for manufacturing the precursor of the positive-electrode active material for the lithium-ion secondary battery according to any one of claims 1 to 5, wherein the lithium-containing compound is lithium carbonate.

7. A method for manufacturing a positive-electrode active material for a lithium-ion secondary battery, the method comprising:
   a calcination step of calcining the precursor manufactured by the method for manufacturing the precursor of the positive-electrode active material for the lithium-ion secondary battery according to any one of claims 1 to 6 at 700°C or more and 900°C or less to obtain a positive-electrode active material.

8. The method for manufacturing the positive-electrode active material for the lithium-ion secondary battery according to claim 7, wherein the calcination step is performed after mixed powder is obtained by mixing the precursor and at least one of a lithium-containing compound and a compound containing a metal element M other than lithium and nickel.

9. The method for manufacturing the positive-electrode active material for the lithium-ion secondary battery according to claim 8, further comprising:

   a pulverization step of pulverizing the mixed powder; and then
   a granulation step of granulating the pulverized mixed powder to form granulated powder,
   wherein the calcination step is performed on the granulated powder.

10. The method for manufacturing the positive-electrode active material for the lithium-ion secondary battery according to claim 8 or 9, further comprising:

a pulverization step of pulverizing the mixed powder; and then
a granulation step of granulating the pulverized mixed powder to form granulated powder,
wherein in response to a mixing amount of a lithium-containing compound in the precursor being less than 100% by mass, a mixing amount of the remaining lithium-containing compound is added after the granulation step to form mixed granulated powder, and the calcination step is performed on the mixed granulated powder.

11. The method for manufacturing the positive-electrode active material for the lithium-ion secondary battery according to claim 9 or 10, wherein the pulverization step comprises a coarse pulverization step and a fine pulverization step.

12. The method for manufacturing the positive-electrode active material for the lithium-ion secondary battery according to claim 10 or 11, wherein a lithium-containing compound mixed before the oxidation step and a lithium-containing compound added after the granulation step are different compounds, and a melting point of the lithium-containing compound mixed before the oxidation step is higher than a melting point of the lithium-containing compound added after the granulation step.

13. The method for manufacturing the positive-electrode active material for the lithium-ion secondary battery according to any one of claims 7 to 12, wherein the positive-electrode active material for the lithium-ion secondary battery is represented by the following composition formula (1):

$$Li_{1+a}Ni_bM_{(1-b)}O_{2+\alpha} \qquad \ldots (1)$$

(where in the formula (1), M is a metal element other than Li and Ni, and a, b, and $\alpha$ are numbers satisfying $-0.1 \leqq a \leqq 0.2$, $0.6 \leqq b \leqq 1.0$, and $-0.2 \leqq \alpha \leqq 0.2$).

14. A precursor of a positive-electrode active material for a lithium-ion secondary battery, comprising metal nickel powder and a lithium-containing compound,
wherein the precursor contains nickel oxide having an oxidation rate of 10% or more and 70% or less, the oxidation rate indicates a ratio of an amount of oxidized nickel to a total amount of nickel contained, and the nickel oxide has a crystallite size of 100 nm or less.

15. A precursor of a positive-electrode active material for a lithium-ion secondary battery, comprising metal nickel powder and a lithium-containing compound,
wherein the precursor contains nickel oxide having an oxidation rate of 10% or more and 70% or less, the oxidation rate indicates a ratio of an amount of oxidized nickel to a total amount of nickel contained, and the precursor further contains lithium metal oxide.

```
┌─────────────────────────┐        ┌─────────────────────────────────┐
│   Metal nickel powder   │        │  Lithium-containing compound    │
│                         │        │         (all or part)           │
└─────────────────────────┘        └─────────────────────────────────┘
              │                                      │
              └──────────────────┬───────────────────┘
                                 │
                       ┌─────────────────┐
                       │     Mixing      │
                       └─────────────────┘
                                 │
                       ┌─────────────────┐
                       │    Oxidation    │
                       └─────────────────┘
                                 │
              ┌───────────────────────────────────┐
              │   Precursor of positive-electrode │
              │          active material          │
              └───────────────────────────────────┘
```

# FIG. 1

```
        ┌─────────────────────────────────────┐
        │ Precursor of positive-electrode     │
        │            active material          │
        └─────────────────────────────────────┘
                            │
                    ┌───────────────┐
                    │    Firing     │
                    └───────────────┘
                            │
            ┌───────────────────────────────┐
            │  Positive-electrode active    │
            │          material             │
            └───────────────────────────────┘
```

# FIG. 2

```
┌───────────────────────────────────────────────────────┐
│ Precursor of positive-electrode active material       │
│ (including part of a lithium-containing compound)     │
└───────────────────────────────────────────────────────┘
              │
              │      ┌───────────────────────────────────────────┐
              ├──────│ Compound containing a metal element       │
              │      │         M other than Li and Ni            │
              │      └───────────────────────────────────────────┘
              │
              │      ┌───────────────────────────────────────────┐
              ├──────│  Remaining amount of the lithium-         │
              │      │         containing compound               │
              │      └───────────────────────────────────────────┘
              │
      ┌───────────────┐
      │    Mixing     │
      └───────────────┘
              │
      ┌───────────────┐
      │    Firing     │
      └───────────────┘
              │
    ┌─────────────────────┐
    │  Positive-electrode │
    │   active material   │
    └─────────────────────┘
```

# FIG. 3

Precursor of positive-electrode active material (including
the total amount of a lithium-containing compound)

Compound containing a metal element
M other than Li and Ni

Pulverization and
mixing

Granulation

Firing

Positive-electrode
active material

**FIG. 4**

Precursor of positive-electrode active material
(including part of a lithium-containing compound)

Compound containing a metal
element M other than Li and Ni

Pulverization and
mixing

Granulation

Remaining amount of the lithium-
containing compound

Mixing

Firing

Positive-electrode
active material

**FIG. 5**

Crude precursor of positive-electrode active material
(including part of a lithium-containing compound)

Compound containing a metal
element M other than Li and Ni

Coarse pulverization

Fine pulverization

Granulation

Remaining amount of the lithium-
containing compound

Mixing

Firing

Positive-electrode
active material

FIG. 6

● Metal nickel
○ Nickel oxide
△ Lithium metal oxide

Comparative Example 2
(oxidation rate 77%)

Example 1 (oxidation rate 68%)

Example 2 (oxidation rate 49%)

Comparative Example 1
(oxidation rate 7%)

Intensity (a.u.)

40  41  42  43  44  45  46  47  48  49  50

2θ(°)

FIG. 7

Comparative Example 2
(oxidation rate 77%)

Example 1 (oxidation rate 68%)

Example 2 (oxidation rate 49%)

Comparative Example 1
(oxidation rate 7%)

## FIG. 8

## FIG. 9

FIG. 10

FIG. 11

FIG. 12

X 5,000    5.0kV   SEI    SFM    WD 10.0mm

5 µm

FIG. 13

X 5,000    5.0kV   COMPO    TTL    WD 6.0mm

5 µm

FIG. 14

## INTERNATIONAL SEARCH REPORT

| International application No. |
| --- |
| **PCT/JP2023/034373** |

| A. | CLASSIFICATION OF SUBJECT MATTER |
| --- | --- |

*H01M 4/525*(2010.01)i; *C01G 53/00*(2006.01)i
FI:   H01M4/525; C01G53/00 A

According to International Patent Classification (IPC) or to both national classification and IPC

| B. | FIELDS SEARCHED |
| --- | --- |

Minimum documentation searched (classification system followed by classification symbols)

H01M4/525; C01G53/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| P, X | WO 2022/209988 A1 (HITACHI METALS, LTD.) 06 October 2022 (2022-10-06) paragraphs [0005]-[0008], [0028]-[0054], [0059], [0068], fig. 3-4 | 1-15 |
| A | JP 2013-4234 A (MURATA MFG CO LTD) 07 January 2013 (2013-01-07) entire text, all drawings | 1-15 |
| A | WO 2012/023501 A1 (MURATA MFG CO LTD) 23 February 2012 (2012-02-23) entire text, all drawings | 1-15 |
| A | JP 2020-158343 A (TOYOTA IND CORP) 01 October 2020 (2020-10-01) entire text, all drawings | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/034373**

| Patent document cited in search report | Publication date (day/month/year) | Patent family member(s) | Publication date (day/month/year) |
|---|---|---|---|
| WO 2022/209988 A1 | 06 October 2022 | (Family: none) | |
| JP 2013-4234 A | 07 January 2013 | (Family: none) | |
| WO 2012/023501 A1 | 23 February 2012 | (Family: none) | |
| JP 2020-158343 A | 01 October 2020 | (Family: none) | |

Form PCT/ISA/210 (patent family annex) (January 2015)

**REFERENCES CITED IN THE DESCRIPTION**

**Patent documents cited in the description**

- JP 2015002120 A
- JP 2020066262 A
- JP 2010082240 A